# NEUE EUROPÄISCHE PATENTSCHRIFT

(11) **EP 2 164 906 B2**
(45) Veröffentlichungstag und Bekanntmachung des Hinweises auf die Entscheidung über den Einspruch: **30.11.2016**
(45) Hinweis auf die Patenterteilung: 28.12.2011
(21) Anmeldenummer: 08774754.9
(22) Anmeldetag: 04.07.2008
(51) Int. Cl.: C09C 1/02, C09C 1/36, C09C 1/42, C09C 3/10, D21H 17/69

(54) **WÄSSRIGE ANSCHLÄMMUNGEN VON FEINTEILIGEN FÜLLSTOFFEN, VERFAHREN ZU IHRER HERSTELLUNG UND IHRE VERWENDUNG ZUR HERSTELLUNG VON PAPIEREN MIT HOHEM FÜLLSTOFFGEHALT UND HOHER TROCKENFESTIGKEIT**
AQUEOUS SUSPENSIONS OF FINE PARTICULATE FILLERS, METHOD FOR PRODUCING THE SAME AND USE THEREOF FOR PRODUCING PAPERS HAVING A HIGH FILLER CONTENT AND A HIGH DRY STRENGTH
SUSPENSIONS AQUEUSES DE CHARGES EN FINES PARTICULES, LEUR PROCÉDÉ DE PRÉPARATION ET LEUR UTILISATION POUR PRODUIRE DES PAPIERS À TENEUR EN CHARGES ET À RÉSISTANCE À SEC ÉLEVÉES

(30) Priorität: 05.07.2007 EP 07111860
(43) Veröffentlichungstag der Anmeldung: 24.03.2010
(73) Patentinhaber: Omya International AG, 4665 Oftringen (CH)
(72) Erfinder: ESSER, Anton, 67117 Limburgerhof (DE); HÄHNLE, Hans-Joachim, 67435 Neustadt (DE); SCHROEDER, Marc, Canton, MI 48188 (US)
(74) Vertreter: Maiwald Patentanwalts GmbH
(86) Internationale Anmeldenummer: PCT/EP2008/058642
(87) Internationale Veröffentlichungsnummer: WO 2009/004077

(56) Entgegenhaltungen:
- WO-A-03/074786
- WO-A-03/087472
- WO-A-2004/087818
- WO-A1-2006/071818
- DE-A1-102005 025 374
- GB-A- 1 505 641
- US-A- 4 054 717
- US-A1- 2002 088 579
- US-A1- 2005 261 394
- US-B2- 6 969 444

## Beschreibung

Die Erfindung betrifft die Verwendung wässrige Anschlämmungen von feinteiligen Füllstoffen, die zumindest teilweise mit einer Zusammensetzung aus mindestens einem wasserlöslichen amphoteren Copolymer und mindestens einem Latex überzogen sind, als Zusatz zum Papierstoff bei der Herstellung von Papieren mit hohem Füllstoffgehalt und hoher Trockenfestigkeit.

Bei der Herstellung füllstoffhaltiger Papiere wird die Füllstoffslurry zu der Fasersuspension zugegeben, bevor diese zum Former der Papiermaschine weitergeleitet wird. Ein Retentionsmittel oder ein Retentionsmittelsystem wird in der Regel zu der Füllstoff/Faserstoffsuspension zugesetzt, um soviel wie möglich Füllstoff im Papierblatt zu retenieren. Die Zugabe des Füllstoffs zum Papier gibt dem Papiermacher die Möglichkeit, zahlreiche Verbesserungen der Blatteigenschaften zu erreichen. Dazu gehören Eigenschaften wie die Opazität, Weisse, Haptik und Bedruckbarkeit.

Wenn darüber hinaus der Füllstoff billiger ist als der Faserstoff, kann die Zugabe oder vermehrte Zugabe von Füllstoff zu einer Reduzierung des Faserstoffanteils und damit zu einer Reduzierung der Herstellkosten des Papiers führen. Füllstoffhaltige Papiere bzw. Papiere mit besonders hohem Füllstoffgehalt lassen sich leichter trocknen als nicht füllstoffhaltige Papiere bzw. als Papiere mit geringerem Füllstoffgehalt. Als Folge daraus kann die Papiermaschine schneller und mit niedrigerem Dampfverbrauch betrieben werden, was sowohl die Produktivität erhöht als auch die Kosten senkt.

Jedoch bringt die Füllstoffzugabe zur Fasersuspension auch Nachteile mit sich, die nur teilweise durch die Zugabe weiterer Papierhilfsmittel kompensiert werden können. Für ein gegebenes Flächengewicht gibt es Grenzen bezüglich der einsetzbaren Füllstoffmenge. Die Festigkeitseigenschaften des Papiers sind normalerweise die wichtigsten Parameter, die die Füllstoffmenge im Papier limitieren. Auch andere Faktoren, wie die Füllstoffretention, die Entwässerung der Papierstoffsuspension sowie ein eventuell erhöhter Chemikalienbedarf bei Retention und Leimung können hier eine Rolle spielen.

Der Verlust von Festigkeitseigenschaften von Papieren kann in machen Fällen ganz oder teilweise durch den Einsatz von Trocken- und Nassverfestigern kompensiert werden. Eine gängige Vorgehensweise ist dabei die Zugabe von kationischer Stärke als Trockenverfestiger in den Papierstoff. Ebenso werden synthetische Trocken- und Nassverfestiger z.B. auf der Basis kationischer oder anionischer Polyacrylamide eingesetzt. Die Zugabemenge und die verfestigende Wirkung sind jedoch in den meisten Fällen begrenzt. Im gleichen Maße ist auch die kompensierende Wirkung im Bezug auf den Festigkeitsverlust durch Füllstofferhöhung und damit auch die überhaupt realisierbare Füllstoffzunahme begrenzt. Darüber hinaus werden nicht alle Festigkeitseigenschaften in gleichem Maße und in manchen Fällen überhaupt nur unzureichend durch den Einsatz von Trockenverfestigern erhöht. Ein wichtiges Beispiel dafür ist die Weiterreisarbeit, die durch den Einsatz von Stärke oder synthetischen Trockenverfestigern im Vergleich zu anderen Festigkeitsparametern nur geringfügig beeinflusst wird. Die Erhöhung des Füllstoffgehaltes im Papier hat dagegen in der Regel einen sehr stark negativen Einfluss auf die Weiterreisarbeit.

Weitere wichtige Eigenschaften sind die Dicke sowie die Steifigkeit des Papiers. Die Erhöhung des Füllstoffgehaltes führt bei gleichem Flächengewicht zu einer Zunahme der Papierdichte und einer Abnahme der Dicke des Papierblattes. Letzteres führt zu einer erheblichen Abnahme der Papiersteifigkeit. Diese Abnahme der Papiersteifigkeit kann in vielen Fällen nicht allein durch den Einsatz von Trockenverfestigern ausgeglichen werden. Häufig sind zusätzliche Maßnahmen wie etwa die Reduzierung des mechanischen Druckes in der Pressenpartie in den Glättwerken, in Kalandern oder in der Trockenpartie der Papiermaschine notwendig. Letzteres kompensiert den Dickeverlust durch Füllstofferhöhung ganz oder teilweise.

In der Literatur sind einige Füllstoffsysteme beschrieben. Aus der WO 01/86067 A1 ist die Modifizierung von Füllstoffen mit hydrophoben Polymeren bekannt, wobei die Füllstoffteilchen mit dem hydrophoben Polymeren überzogen werden. Die hydrophoben Polymeren gemäß WO 01/86067 A1 sind stärkehaltig. Die damit hergestellten Papiere weisen verbesserte Eigenschaften wie Nassfestigkeit auf.

Aus der JP-A 08059740 ist bekannt, dass man zu wässrigen Suspensionen von anorganischen Teilchen amphotere wasserlösliche Polymeren zusetzt, wobei zumindest ein Teil der Polymeren auf der Füllstoffoberfläche adsorbiert wird. Die amphoteren Polymeren werden vorzugsweise durch Hydrolysieren von Copolymerisaten aus N-Vinylformamid, Acrylnitril und Acrylsäure in Gegenwart von Säuren hergestellt. Sie enthalten 20 bis 90 Mol-% Amidineinheiten der Struktur 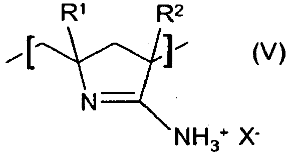 in der R¹ und R² jeweils H oder eine Methylgruppe und X- ein Anion bedeuten. Die mit solchen Polymeren behandelten Füllstoffslurries werden bei der Herstellung von füllstoffhaltigen Papieren dem Papierstoff zugesetzt. Die Füllstoffbehandlung führt zu einer Verbesserung der Entwässerung des Papierstoffs und ergibt außerdem eine Verbesserung verschiedener Festigkeitseigenschaften des getrockneten Papiers sowie eine Verbesserung der Füllstoffretention.

GB 1505641 offenbart ein Verfahren zur Herstellung einer Füllstoffanschlämmung durch Umsetzung einer Suspension eines Füllstoffes mit positivem Zetapotential mit einem anionischen Latex.

WO 03074786 offenbart wässrigen Anschlämmungen von feinteiligen Füllstoffen, die mit Copolymeren auf Basis von Styrol und Butadien oder Styrol und Acrylestern beschichtet werden.

In der US 2002/0088579 A1 wird die Vorbehandlung von anorganischen Füllstoffen mit kationischen, anionischen und amphoteren (zwitterionischen) Polymeren beschrieben. Die Behandlung besteht dabei in jedem Fall aus mindestens zwei Stufen. Empfohlen wird zuerst die Behandlung mit einem kationischen Polymer und anschließend die Behandlung mit einem anionischen Polymer. In weiteren Schritten können alternierend wieder weitere kationische und anionische Polymere adsorbiert werden. Die wässrigen Suspensionen mit den vorbehandelten Füllstoffteilchen werden bei der Herstellung von füllstoffhaltigem Papier dem Papierstoff zugesetzt. Die Füllstoffbehandlung führt zu einer Verbesserung verschiedener Festigkeitseigenschaften des getrockneten Papiers.

Die WO 04/087818 A1 beschreibt wässrige Anschlämmungen von feinteiligen Füllstoffen, die zumindest teilweise mit Polymerisaten überzogen sind und die erhältlich sind durch Behandeln von wässrigen Anschlämmungen feinteiliger Füllstoffe mit mindestens einem wasserlöslichen amphoteren Copolymerisat, das erhältlich ist durch Copolymerisieren von
a) mindestens einem N-Vinylcarbonsäureamid der Formel 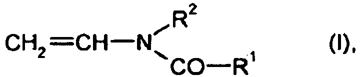 in der R¹, R² = H oder C₁- bis C₆-Alkyl bedeuten,
b) mindestens einer monoethylenisch ungesättigten Carbonsäure mit 3 bis 8 C-Atomen im Molekül und/oder deren Alkalimetall-, Erdalkalimetall- oder Ammoniumsalzen und gegebenenfalls
c) anderen monoethylenisch ungesättigten Monomeren, die frei von Nitrilgruppen sind, und gegebenenfalls
d) Verbindungen, die mindestens zwei ethylenisch ungesättigte Doppelbindungen im Molekül aufweisen,
und anschließende teilweise oder vollständige Abspaltung der Gruppen -CO-R¹ aus den in das Copolymerisat einpolymerisierten Monomeren (I).

Aus der WO 05/012637 A1 sind wässrige Zusammensetzungen, umfassend wenigstens einen feinteiligen Füllstoff und wenigstens ein wasserlösliches amphoteres Copolymerisat, das erhältlich ist durch Copolymerisieren eines Monomergemischs, enthaltend
a) wenigstens ein N-Vinylcarbonsäureamid der allgemeinen Formel 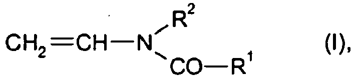 worin R¹ und R² unabhängig voneinander für H oder C₁- bis C₆-Alkyl stehen,
b) wenigstens ein Monomer, das ausgewählt ist unter monoethylenisch ungesättigten Sulfonsäuren, Phosphonsäuren, Phosphorsäureestern und Derivaten davon,
c) gegebenenfalls wenigstens ein Monomer, das ausgewählt ist unter monoethylenisch ungesättigten Mono- und Dicarbonsäuren, deren Salzen und Dicarbonsäureanhydriden,
d) gegebenenfalls wenigstens ein von den Komponenten a) bis c) verschiedenes monoethylenisch ungesättigtes Monomer, das frei von Nitrilgruppen ist, und
e) gegebenenfalls wenigstens eine Verbindung, die mindestens zwei ethylenisch ungesättigte Doppelbindungen im Molekül aufweist,
mit der Maßgabe, dass das Monomergemisch wenigstens ein Monomer b) oder c) mit mindestens einer freien Säuregruppe und/oder einer Säuregruppe in Salzform enthält,
und anschließende teilweise oder vollständige Hydrolyse der Gruppen -CO-R¹ aus den in das Copolymerisat einpolymerisierten Monomeren (I), bekannt.

Durch die genannten Veröffentlichen sind demnach Verfahren bekannt, die die Behandlung von Füllstoffen durch amphotere synthetische Polymere vor der Zugabe der Füllstoffslurry zum Faserstoff und die anschließende Bildung des Papierblattes beschreiben. Insbesondere in WO 04/087818 A1 und WO 05/012637 A1 wurde gezeigt, dass die Papierblätter mit vorheriger Behandlung des Füllstoffes, eine erhebliche Zunahme verschiedener Trockenfestigkeitsparameter wie z. B. der Reislänge und der inneren Festigkeit aufweisen.

Aus der WO 03/087472 A1 ist ein Verfahren bekannt, das die Behandlung von Füllstoffen mit einer Zusammensetzung bestehend aus gequollenen Stärkepartikeln und Latices beschreibt. Die in dieser Schrift eingesetzten Latices sind wasserunlöslich und liegen in Form einer Dispersion vor. Nach separater Herstellung dieser Zusammensetzung wird diese zur Füllstoffslurry zugegeben, abschließend erfolgt die Zugabe zum Faserstoff und die Blattbildung. Gemäß der Lehre der WO 03/087472 A1 handelt es sich bei den Stärkepartikeln um gequollene Stärkepartikel. Weiterhin kann die Zusammensetzung noch andere Coadditive wie anionische oder kationische Coadditive enthalten. Wasserlösliche amphotere Copolymere werden in WO 03/087472 A1 nicht offenbart.

Der vorliegenden Erfindung lag daher die Aufgabe zugrunde, weitere alternative wässrige Anschlämmungen von feinteiligen Füllstoffen zur Verfügung zu stellen, die bei der Herstellung von Papier mit hohem Füllstoffgehalt einsetzbar sind. Die damit hergestellten Papiere sollen Festigkeitseigenschaften aufweisen, die mit denen herkömmlicher Papiere mit niedrigem Füllstoffgehalt vergleichbar sind. Zu diesen Festigkeitseigenschaften zählen vor allem die Trokkenreislänge, die innere Festigkeit sowie die Steifigkeit des Papiers.

Die Aufgabe wird erfindungsgemäß gelöst durch die Verwendung von wässrigen Anschlämmungen von feinteilige Füllstoffen, die zumindest teilweise mit einer Zusammensetzung aus mindestens einem wasserlöslichen amphoteren Copolymerisat und mindestens einem Latex überzogen sind, als Zusatz zum Papierstoff bei der Herstellung von füllstoffhaltigem Papier, füllstoffhalfigem Karton oder füllstoffhaltiger Pappe durch Entwässern des Papierstoffs.

Unter dem Begriff Latex im Sinne der vorliegenden Erfindungen werden wasserunlösliche Homo- und Copolymerisate verstanden, die vorzugsweise in Form von Dispersionen oder Emulsionen eingesetzt werden.

In einer ersten bevorzugten Ausführungsform (Ausführungsform A) sind die erfindungsgemäßen wässrigen Anschlämmungen erhältlich durch Behandeln von wässrigen Anschlämmungen feinteiliger Füllstoffe mit mindestens einem wasserlöslichen amphoteren Copolymerisat und mindestens einem Latex, wobei das wasserlösliche amphotere Copolymerisat erhältlich ist durch Copolymerisieren eines Monomergemischs von
(a) wenigstens einem N-Vinylcarbonsäureamid der allgemeinen Formel 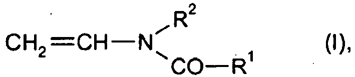 worin R¹ und R² unabhängig voneinander für H oder C₁- bis C₆-Alkyl stehen,
(b) wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
(c) gegebenenfalls wenigstens einem von den Komponenten (a) und (b) verschiedenen monoethylenisch ungesättigten Monomer, und
(d) gegebenenfalls wenigstens eine Verbindung, die mindestens zwei ethylenisch ungesättigte Doppelbindungen im Molekül aufweist,
mit der Maßgabe, dass das Monomerengemisch mindestens ein Monomer (b) mit mindestens einer freien Säuregruppe und/oder einer Säuregruppe in Salzform enthält,
und anschließende teilweise oder vollständige Hydrolyse der Gruppen -CO-R¹ aus den in das Copolymerisat einpolymerisierten Monomeren (a).
In einer anderen, zweiten bevorzugten Ausführungsform (Ausführungsform B) sind die erfindungsgemäßen wässrigen Anschlämmungen erhältlich durch Behandeln von wässrigen Anschlämmungen feinteiliger Füllstoffe mit mindestens einem wasserlöslichen amphoteren Copolymerisat und mindestens einem Latex, wobei das wasserlösliche amphotere Copolymerisat erhältlich ist durch Copolymerisieren eines Monomergemischs von
(b) wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
(e) wenigstens einem ethylenisch ungesättigten Monomer, das eine kationische Gruppe und/oder eine durch Protionierung kationisch aufladbare Gruppe trägt,
(f) gegebenenfalls wenigstens einem von den Komponenten (b) und (e) verschiedenen monoethylenisch ungesättigten Monomer, und
(d) gegebenenfalls wenigstens eine Verbindung, die mindestens zwei ethylenisch ungesättigte Doppelbindungen im Molekül aufweist.

Die wässrigen Anschlämmungen enthalten beispielsweise 1 bis 70 Gew.-%, bevorzugt 5 bis 50 Gew.-%, besonders bevorzugt 10 bis 40 Gew.-%, mindestens eines feinteiligen Füllstoffes. Die Menge an wasserlöslichen amphoteren Copolymerisat beträgt beispielsweise 0,01 bis 5 Gew.-%, vorzugsweise 0,05 bis 2,5 Gew.-%, besonders bevorzugt 0,05 bis 1 Gew.-%, bezogen auf den Füllstoff. Die Dosiermenge des Latices beträgt beispielsweise 0,1 bis 10 Gew.-%, vorzugsweise 0,2 bis 7,5 Gew.-%, besonders bevorzugt 0,2 bis 5 Gew.-%, bezogen auf den Füllstoff.

Beschrieben wird weiterhin ein Verfahren zur Herstellung der wässrigen Anschlämmungen, wobei man einer wässrigen Anschlämmung mindestens eines feinteiligen Füllstoffes mit 0,01 bis 5 Gew.-%, bezogen auf den Füllstoff, mindestens eines wasserlösliches amphoteres Copolymerisats und mit 0,1 bis 10 Gew.-%, bezogen auf den Füllstoff, mindestens eines Latices behandelt.

In einer ersten bevorzugten Ausführungsform des Verfahrens sind die wässrigen Anschlämmungen der Ausführungsform A erhältlich durch Behandeln von wässrigen Anschlämmungen feinteiliger Füllstoffe mit mindestens einem wasserlöslichen amphoteren Copolymerisat und mindestens einem Latex, wobei das wasserlösliche amphotere Copolymerisat erhältlich ist durch Copolymerisieren eines Monomergemischs von
(a) wenigstens einem N-Vinylcarbonsäureamid der allgemeinen Formel 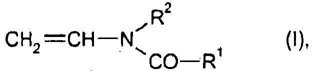 worin R¹ und R² unabhängig voneinander für H oder C₁- bis C₆-Alkyl stehen,
(b) wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
(c) gegebenenfalls wenigstens einem von den Komponenten (a) und (b) verschiedenen monoethylenisch ungesättigten Monomer, und
(d) gegebenenfalls wenigstens eine Verbindung, die mindestens zwei ethylenisch ungesättigte Doppelbindungen im Molekül aufweist,

In einer anderen, zweiten bevorzugten Ausführungsform des Verfahrens sind wässrigen Anschlämmungen der Ausführungsform B erhältlich durch Behandeln von wässrigen Anschlämmungen feinteiliger Füllstoffe mit mindestens einem wasserlöslichen amphoteren Copolymerisat und mindestens einem Latex, wobei das wasserlösliche amphotere Copolymerisat erhältlich ist durch Copolymerisieren eines Monomergemischs von
(b) wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
(e) wenigstens einem ethylenisch ungesättigten Monomer, das eine kationische Gruppe und/oder eine durch Protonierung kationisch aufladbare Gruppe trägt,
(f) gegebenenfalls wenigstens einem von den Komponenten (b) und (e) verschiedenen monoethylenisch ungesättigten Monomer, und
(d) gegebenenfalls wenigstens eine Verbindung, die mindestens zwei ethylenisch ungesättigte Doppelbindungen im Molekül aufweist.

Im Rahmen der vorliegenden Erfindung umfasst der Ausdruck Alkyl geradkettige oder verzweigte Alkylgruppen. Geeignete Alkylgruppen sind C₁-C₆-Alkyl wie beispielsweise Methyl, Ethyl, Propyl, Isopropyl, n-Butyl, sec-Butyl, tert.-Butyl, 1,1-Dimethylethyl, Pentyl, 2-Methylbutyl, 1,1-Dimethylpropyl, 1,2-Dimethylpropyl, 2,2-Dimethylpropyl, 1-Ethylpropyl, Hexyl, 2-Methylpentyl, 3-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 2-Ethylbutyl, 1,1,2-Trimethylpropyl, 1,2,2-Trimethylpropyl, 1-Ethyl-1-methylpropyl, 1-Ethyl-2-methylpropyl.

Die wässrigen Anschlämmungen der Ausführungsform A enthalten jeweils wenigstens ein Monomer der Gruppe (a) und (b) sowie gegebenenfalls wenigstens ein Monomer der Gruppe (c) und gegebenenfalls wenigstens ein Monomer der Gruppe (d). Im Folgenden werden wasserlösliche amphotere Copolymerisate für wässrige Anschlämmungen der Ausführungsform A näher beschrieben.

Beispiele für Monomere der Gruppe (a) sind offenkettige N-Vinylamidverbindungen der Formel (I) wie beispielsweise N-Vinylformamid, N-Vinyl-N-methylformamid, N-Vinylacetamid, N-Vinyl-N-methylacetamid, N-Vinyl-N-ethylacetamid, N-Vinylpropionamid und N-Vinyl-N-methylpropionamid und N-Vinylbutyramid. Die Monomeren der Gruppe (a) können allein oder in Mischung bei der Copolymerisation mit den Monomeren der anderen Gruppen eingesetzt werden.

Die erfindungsgemäß eingesetzten wässrigen Anschlämmungen enthalten wenigstens ein Monomer der Gruppe (b), wobei diese ausgewählt sind aus der Gruppe bestehend aus
(b₁) monoethylenisch ungesättigten Sulfonsäuren, Phosphonsäuren, Phosphorsäureestern und Derivaten davon, und
(b₂) monoethylenisch ungesättigten Mono- und Dicarbonsäuren, deren Salzen und Dicarbonsäureanhydriden.

Als Monomere der Gruppe (b₁) sind Verbindungen geeignet, die einen organischen Rest mit einer polymerisierbaren, α,β-ethylenisch ungesättigten Doppelbindung und einer Sulfonsäure- oder Phosphonsäuregruppe pro Molekül aufweisen. Geeignet sind weiterhin die Salze und Ester der zuvor genannten Verbindungen. Bei den Estern der Phosphonsäuren kann es sich dabei um die Mono- oder die Diester handeln. Geeignete Monomere (b₁) sind weiterhin Ester der Phosphorsäure mit Alkoholen mit einer polymersierbaren, α,β-ethylenisch ungesättigten Doppelbindung. Dabei kann eines oder können die beiden übrigen Protonen der Phosphorsäuregruppe durch geeignete Basen neutralisiert oder mit Alkoholen, die keine polymerisierbaren Doppelbindungen aufweisen, verestert werden.

Geeignete Basen zur teilweisen oder vollständigen Neutralisation der Säuregruppen der Monomere (b₁) sind beispielsweise Alkalimetall- oder Erdalkalimetallbasen, Ammoniak, Amine und/oder Alkanolamine. Beispiele hierfür sind Natriumhydroxid, Kaliumhydroxid, Natriumcarbonat, Kaliumcarbonat, Natriumhydrogencarbonat, Kaliumhydrogencarbonat, Magnesiumhydroxid, Magnesiumoxid, Calciumhydroxid, Calciumoxid, Triethanolamin, Ethanolamin, Morpholin, Diethylentriamin oder Tetraethylenpentamin. Geeignete Alkohole zur Veresterung der Phosphorsäure sind beispielsweise C₁-C₆-Alkanole, wie beispielsweise Methanol, Ethanol, n-Propanol, Isopropanol, n-Butanol, sec-Butanol, tert.-Butanol, n-Pentanol, n-Hexanol sowie deren Isomere.

Zu den Monomeren (b₁) zählen beispielsweise Vinylsulfonsäure, Allylsulfonsäure, Methallylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäure, Acrylamidomethylenphosphonsäure, 2-Acryl-amido-2-methylpropansulfonsäure, Vinylphsophonsäure, CH₂=CH-NH-CH₂-PO₃H, Vinylphosphönsäuremonomethylester, Vinylphosphonsäuredimethylester, Allylphosphonsäure, Allylphosphonsäuremonomethylester, Allylphosphonsäuredimethylester, Acrylamidomethylpropylphosphonsäure, (Meth)acrylethylenglykolphosphat und Phosphorsäuremonoallylester.

Werden als Komponente (b₁) ausschließlich Monomere eingesetzt, bei denen alle Protonen der Säuregruppen verestert sind, wie z.B. Vinylphosphonsäuredimethylester oder Allylphosphonsäuredimethylester, so wird zur Polymerisation wenigstens eine monoethylenisch ungesättigte Mono- und/oder Dicarbonsäure oder ein Salz davon eingesetzt, wie sie im Folgenden als Komponente (b₂) beschrieben werden. Somit ist sichergestellt, dass die erfindungsgemäß eingesetzten Copolymerisate anionogene/anionische Gruppen aufweisen. Alternativ dazu können auch die Bedingungen für die Hydrolyse so gewählt werden, dass die Estergruppen teilweise abgespalten werden.

Die zuvor genannten Monomere (b₁) können einzeln oder in Form von beliebigen Mischungen eingesetzt werden.

Als Monomere der Gruppe (b₂) kommen monoethylenisch ungesättigte Carbonsäuren mit 3 bis 8 C-Atomen sowie die wasserlöslichen Salze wie Akalimetall-, Erdalkalimetall- oder Ammoniumsalze dieser Carbonsäuren und die monoethylenisch ungesättigten Carbonsäureanhydride in Betracht. Zu dieser Gruppe von Monomeren gehören beispielsweise Acrylsäure, Methacrylsäure, Dimethacrylsäure, Ethacrylsäure, α-Chloracrylsäure, Maleinsäure, Maleinsäureanhydrid, Fumarsäure, Itaconsäure, Mesaconsäure, Citraconsäure, Glutaconsäure, Aconitsäure, Methylenmalonsäure, Allylessigsäure, Vinylessigsäure und Crotonsäure. Die Monomeren dieser Gruppe (b₂) können allein oder in Mischung miteinander, in teilweise oder in vollständig neutralisierter Form bei der Copolymerisation eingesetzt werden. Zur Neutralisation geeignete Basen sind die bei der Komponente (b₁) genannten.

Erfindungsgemäß enthält das wasserlösliche amphotere Copolymerisat wenigstens ein Monomer aus der Gruppe (b), das ausgewählt ist aus den Untergruppen (b₁) und (b₂). Selbstverständlich kann das wasserlösliche amphotere Copolymerisat auch Mischungen von Monomeren aus den Untergruppen (b₁) und (b₂) enthalten.

Die Copolymerisate können zur Modifizierung gegebenenfalls wenigstens ein weiteres Monomer der Gruppe (c) in einpolymerisierter Form enthalten. Vorzugsweise sind diese Monomere ausgewählt unter Estern α,β-ethylenisch ungesättigter Mono- und Dicarbonsäuren mit C₁-C₃₀-Alkanolen, C₂-C₃₀-Alkandiolen und C₂-C₃₀-Aminoalkoholen, Amiden α,β-ethylenisch ungesättigter Monocarbonsäuren und deren N-Alkyl- und N,N-Dialkylderivaten, Estern von Vinylalkohol und Allylalkohol mit C₁-C₃₀-Monocarbonsäuren, N-Vinyllactamen, stickstoffhaltigen Heterocyclen mit α,β-ethylenisch ungesättigten Doppelbindungen, Vinylaromaten, Vinylhalogeniden, Vinylidenhalogeniden, C₂-C₈-Monoolefinen und Mischungen davon.

Geeignete Vertreter dieser Gruppe (c) sind z.B. Methyl(meth)acrylat, Methylethacrylat, Ethyl(meth)acrylat, Ethylethacrylat, n-Butyl(meth)acrylat, Isobutyl(meth)acrylat, tert.-Butyl(meth)acrylat, tert.-Butylethacrylat, n-Ocytl(meth)acrylat, 1,1,3,3-Tetramethylbutyl(meth)acrylat, Ethylhexyl(meth)acrylat und Mischungen davon.

Geeignete zusätzliche Monomere (c) sind weiterhin die Ester von α,β-ethylenisch ungesättigten Mono- und Dicarbonsäuren mit Aminoalkoholen, vorzugsweise C₂-C₁₂-Aminoalkoholen. Diese können am Aminstickstoff C₁-C₈-monoalkyliert oder -dialkyliert sein. Als Säurekomponente dieser Ester eignen sich z.B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden Acrylsäure, Methacrylsäure und deren Gemische eingesetzt. Dazu zählen beispielsweise N-Methylaminomethyl(meth)acrylat, N-Methylaminoethyl(meth)acrylat, N,N-Dimethylaminomethyl(meth)acrylat, N,N-Dimethylaminoethyl(meth)acrylat, N,N-Diethylaminoethyl(meth)acrylat, N,N-Dimethylaminopropyl(meth)acrylat, N,N-Diethylaminopropyl(meth)acrylat und N,N-Dimethylaminocyclohexyl(meth)acrylat.

Geeignete zusätzliche Monomere (c) sind weiterhin Acrylsäureamid, Methacrylsäureamid, N-Methyl(meth)acrylamid, N-Ethyl(meth)acrylamid, n-Propyl(meth)acrylamid, N-(n-Butyl)(meth)acrylamid, tert.-Butyl(meth)acrylamid, n-Octyl(meth)acrylamid, 1,1,3,3-Tetramethylbutyl(meth)acrylamid, Ethylhexyl(meth)acrylamid und Mischungen davon.

Weiterhin sind als Monomere (c) geeignet 2-Hydroxyethyl(meth)acrylat, 2-Hydroxyethylethacrylat, 2-Hydroxypropyl(meth)acrylat, 3-Hydroxypropyl(meth)acrylat, 3-Hydroxybutyl(meth)acrylat, 4-Hydroxybutyl(meth)acrylat, 6-Hydroxyhexyl(meth)acrylat und Mischungen davon.

Darüber hinaus sind als weitere Monomere (c) N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)butyl]methacrylamid, N-[2-(Diethylamino)ethyl]acrylamid, N-[2-(Diethylamino)ethyl]methacrylamid und Mischungen davon geeignet.

Weiterhin geeignete Monomere der Gruppe (c) sind Nitrile von α,β-ethylenisch ungesättigten Mono- und Dicarbonsäuren, wie beispielsweise Acrylnitril und Methacrylnitril.

Geeignete Monomere (c) sind weiterhin N-Vinyllactame und deren Derivate, die z.B. einen oder mehrere C₁-C₆-Alkylsubstituenten (wie oben definiert) aufweisen können. Dazu zählen N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam und deren Mischungen.

Weiterhin sind als Monomere (c) N-Vinylimidazole und Alkylvinylimidazole geeignet, insbesondere Methylvinylimidazole wie beispielsweise 1-Vinyl-2-methylimidazol, 3-Vinylimidazol-N-oxid, 2- und4-Vinylpyridin-N-oxide sowie betainische Derivate und Quaternisierungsprodukte dieser Monomere.

Geeignete zusätzliche Monomere sind weiterhin Ethylen, Propylen, Isobutylen, Butadien, Styrol, α-Methylstyrol, Vinylacetat, Vinylpropionat, Vinylchlorid, Vinylidenchlorid, Vinylfluorid, Vinylidenfluorid und Mischungen davon.

Die zuvor genannten Monomere (c) können einzeln oder in Form von beliebigen Mischungen eingesetzt werden.

Eine weitere Modifizierung der Copolymerisate ist dadurch möglich, dass man bei der Copolymerisation Monomere (d) einsetzt, die mindestens zwei Doppelbindungen im Molekül enthalten, z. B. Methylenbisacrylamid, Glykoldiacrylat, Glykoldimethacrylat, Glycerintriacrylat, Pentaerythrittriallylether, mindestens zweifach mit Acrylsäure und/oder Methacrylsäure veresterte Polyalkylenglykole oder Polyole wie Pentaerythrit, Sobit oder Glukose. Falls mindestens ein Monomer der Gruppe (d) bei der Copolymerisation eingesetzt wird, so betragen die angewendeten Mengen bis zu 2 Mol-%, z. B. 0,001 bis 1 Mol-%.

In einer bevorzugten Ausführungsform wird zur Polymerisation ein Monomergemisch eingesetzt, wobei die Komponente (b) entweder nur aus Monomeren (b₁) oder nur aus Monomeren der Untergruppe (b₂) besteht, mit der Maßgabe, dass das Monomerengemisch mindestens ein Monomer (b) mit mindestens einer freien Säuregruppe und/oder einer Säuregruppe in Salzform enthält.

In einer besonders bevorzugten Ausführungsform werden zur Polymerisation mit den Monomeren (a) der Formel (I) nur Monomere der Untergruppe (b₂) eingesetzt.

Die erfindungsgemäß eingesetzten wasserlöslichen amphoteren Copolymerisate für wässrige Anschlämmungen der Ausführungsform A sind beispielsweise erhältlich durch radikalische Copolymerisation von
(a) 1 bis 99 Gew.-%, bevorzugt 5 bis 95 Gew.-%, insbesondere 20 bis 90 Gew.-%, bezogen auf das Gesamtgewicht der zur Polymerisation eingesetzten Monomere, wenigstens eines N-Vinylcarbonsäureamids der allgemeinen Formel 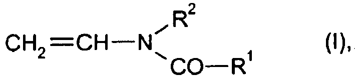 worin R¹ und R² unabhängig voneinander für H oder C₁- bis C₆-Alkyl stehen,
(b) 1 bis 99 Gew.-%, bevorzugt 5 bis 95 Gew.-%, insbesondere 10 bis 80 Gew.-%, bezogen auf das Gesamtgewicht der zur Polymerisation eingesetzten Monomere, wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
   bevorzugt 1 bis 99 Gew.-%, besonders bevorzugt 5 bis 95 Gew.-%, insbesondere bevorzugt 10 bis 80 Gew.-%, bezogen auf das Gesamtgewicht der zur Polymerisation eingesetzten Monomere, wenigstens einem Monomer, das ausgewählt ist aus der Untergruppe (b₂),
(c) 0 bis 30 Gew.-%, bevorzugt 0,1 bis 25 Gew.-%, insbesondere 1 bis 15 Gew.-%, bezogen auf das Gesamtgewicht der zur Polymerisation eingesetzten Monomere, wenigstens einem von den Komponenten (a) und (b) verschiedenen monoethylenisch ungesättigten Monomer, und
(d) 0 bis 5 Gew.-%, bevorzugt 0,0001 bis 3 Gew.-%, bezogen auf das Gesamtgewicht der zur Polymerisation eingesetzten Monomere, wenigstens einer Verbindung, die mindestens zwei ethylenisch ungesättigte Doppelbindungen im Molekül aufweist,
mit der Maßgabe, dass das Monomerengemisch mindestens ein Monomer (b) mit mindestens einer freien Säuregruppe und/oder einer Säuregruppe in Salzform enthält,
und anschließender teilweiser oder vollständiger Hydrolyse der in das Copolymerisat einpolymerisierten Monomeren (a).

Beispielsweise sind solche wasserlöslichen amphoteren Copolymerisate für wässrige Anschlämmungen der Ausführungsform A bevorzugt, die durch Copolymerisieren von
(a) wenigstens einem N-Vinylcarbonsäureamid der allgemeinen Formel 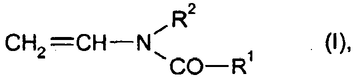 worin R¹ und R² unabhängig voneinander für H oder C₁- bis C₆-Alkyl stehen,
(b) wenigstens einem Monomer aus der Gruppe (b₂), das ausgewählt ist aus monoethylenisch ungesättigten Carbonsäuren mit 3 bis 8 C-Atomen und den wasserlöslichen Salzen wie Alkalimetall-, Erdalkalimetall- und Ammoniumsalzen dieser Carbonsäuren,
(c) gegebenenfalls wenigstens einem von den Komponenten (a) und (b) verschiedenen monoethylenisch ungesättigten Monomer, und
(d) gegebenenfalls wenigstens eine Verbindung, die mindestens zwei ethylenisch ungesättigte Doppelbindungen im Molekül aufweist,
und anschließende teilweise oder vollständige Hydrolyse der Gruppen -CO-R¹ aus den in das Copolymerisat einpolymerisierten Monomeren (a) hergestellt werden.

Besonders bevorzugt sind solche wasserlöslichen amphoteren Copolymerisate für wässrige Anschlämmungen der Ausführungsform A, die erhältlich sind durch Copolymerisieren von
(a) N-Vinylformamid,
(b) Acrylsäure, Methacrylsäure und/oder deren Allkalimetall- oder Ammoniumsalzen, und
(c) gegebenenfalls anderen monoethylenisch ungesättigten Monomeren,
und anschließende teilweise oder vollständige Hydrolyse der in den Copolymerisaten enthaltenen Vinylformamideinheiten.

Die Hydrolyse der nach dem oben beschriebenen Verfahren erhaltenen wasserlöslichen amphoteren Copolymerisate für wässrige Anschlämmungen der Ausführungsform A erfolgt nach bekannten Verfahren durch Einwirkung von Säuren, Basen oder Enzymen, beispielsweise Salzsäure, Natronlauge oder Kalilauge. Hierbei entstehen aus den einpolymerisierten Monomeren (a) der oben angegebenen Formel (I) durch Abspaltung der -CO-R¹-Gruppe Copolymerisate, die Vinylamineinheiten der Formel (II) und/oder Amidineinheiten der Formel (III) und/oder (IV) enthalten 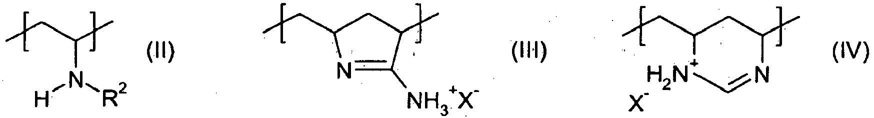 wobei in den Amidineinheiten (III) und (IV) X⁻ jeweils ein Anion bedeutet.

Das ursprünglich anionische Copolymerisat erhält dadurch kationische Gruppen und wird somit amphoter.

Die Amidineinheiten (III) und (IV) entstehen durch Reaktion benachbarter Vinylaminheiten der Formel (II) mit Vinylformamideinheiten bzw. durch Reaktion benachbarter Vinylamineinheiten der Formel (II) mit (Meth)acrylnitrilgruppen. Im Folgenden wird für die wasserlöslichen amphoteren Copolymerisate immer die Summe von Vinylamin- und Amidineinheiten angegeben, die aus den einpolymerisierten Einheiten der N-Vinylcarbonsäureamide entstehen.

Die Hydrolyse der Monomeren ist beispielsweise in EP 0 672 212 B1 auf Seite 4, Zeilen 38 - 58 und auf Seite 5, Zeilen 1-25 offenbart. Bevorzugt werden hydrolysierte Copolymerisate eingesetzt, bei der die Hydrolyse in Gegenwart von BAsen, bevorzugt in Gegenwart von Natronlauge, durchgeführt wurde. Der Hydrolysegrad der einpolymerisierten Vinylcarbonsäureamidgruppen beträgt beispielsweise 0,1 bis 100 Mol-%, meistens 1 bis 98 Mol-%, vorzugsweise 10 bis 80 Mol-%. Besonders bevorzugt ist der Hydrolysegrad so zu wählen, dass kationische und anionische Ladungen im wasserlöslichen amphoteren Copolymerisat in etwa ausgeglichen sind, wobei die Abweichung von der Ladungsgleichheit in der Regel nicht mehr als 20 % beträgt.

Die hydrolysierten Copolymerisate enthalten beispielsweise
(i) 1 bis 98 Mol-%, vorzugsweise 1 bis 75 Mol-% Vinylcarbonsäureamideinheiten,
(ii) 1 bis 98 Mol-%, vorzugsweise 1 bis 55 Mol-% Einheiten von monoethylenisch ungesättigten Sulfonsäuren, Phosphonsäuren, Phosphorsäureestern, Derivaten davon, oder Einheiten von monoethylenisch ungesättigten Mono- und Dicarbonsäuren, deren Salzen und Dicarbonsäureanhydriden, bevorzugt 1 bis 98 Mol-%, vorzugsweise 1 bis 55 Mol-% Einheiten mindestens einer monoethylenisch ungesättigten Carbonsäure mit 3 bis 8 C-Atomen,
(iii) 1 bis 98 Mol-%, vorzugsweise 1 bis 55 Mol-% Vinylamineinheiten der Formel (II) und/oder Amidineinheiten der Formel (III) und/oder (IV), und
(iv) bis zu 30 Mol-% Einheiten von anderen monoethylenisch ungesättigten Verbindungen.

Besonders bevorzugt sind solche hydrolysierten Copolymerisate, die
(i) 5 bis 70 Mol-% Vinylcarbonsäureamideinheiten,
(ii) 3 bis 30 Mol-% Einheiten von monoethylenisch ungesättigten Sulfonsäuren, Phosphonsäuren und Salzen davon, oder 5 bis 45 Mol-% Einheiten von Acrylsäure, Methacrylsäure, Salzen und Gemischen davon, bevorzugt 15 bis 45 Mol-% Acrylsäure- und/oder Methacrylsäureeinheiten, und
(iii) 10 bis 50 Mol-% Vinylamineinheiten in Salzform und/oder Amidineinheiten der Formel (III) und/oder (IV)
enthalten.

Wie zuvor beschrieben, sind auch wässrigen Anschlämmungen der Ausführungsform B bevorzugt. Die wässrigen Anschlämmungen der Ausführungsform B enthalten jeweils wenigstens ein Monomer der Gruppen (b) und (e) sowie gegebenenfalls wenigstens ein Monomer der Gruppe (f) und gegebenenfalls wenigstens ein Monomer der Gruppe (d). Im Folgenden werden wasserlösliche amphotere Copolymerisate für wässrige Anschlämmungen der Ausführungsform B näher beschrieben.

Die Monomeren der Gruppe (b) sind identisch mit denen der Gruppe (b) der wasserlöslichen amphoteren Copolymerisate für wässrige Anschlämmungen der Ausführungsform A. Ebenfalls identisch in beiden Ausführungsformen A und B sind die Monomeren der Gruppe (d), bei denen es sich um Verbindungen handelt, die mindestens zwei ethylenisch ungesättigte Doppelbindungen im Molekül aufweisen.

Daher gelten für die Monomeren der Gruppen (b) und (d) die zuvor gemachten Auflistungen inklusive der bevorzugten Ausführungsformen.

Geeignete Monomere der Gruppe (e) sind die Ester von α,β-ethylenisch ungesättigten Mono- und Dicarbonsäuren mit Aminoalkoholen, vorzugsweise C₂-C₁₂-Aminoalkoholen. Diese können am Aminstickstoff C₁-C₈-monoalkyliert oder-dialkyliert sein. Als Säurekomponente dieser Ester eignen sich z. B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden Acrylsäure, Methacrylsäure und deren Gemische eingesetzt. Dazu zählen beispielsweise N-Methylaminomethyl(meth)acrylat, N-Methylaminoethyl(meth)acrylat, N,N-Dimethylaminomethyl(meth)acrylat, N,N-Dimethylaminoethyl(meth)acrylat, N,N-Diethylaminoethyl(meth)acrylat, N,N-Dimethylaminopropyl(meth)acrylat, N,N-Diethylaminopropyl(meth)acrylat und N,N-Dimethylaminocyclohexyl(meth)acrylat.

Ebenfalls geeignet sind die Quarternierungsprodukte der vorstehenden Verbindungen mit C₁-C₈ Alkylchloriden, C₁-C₈-Dialkylsulfaten, C₁-C₁₆-Epoxiden oder Benzylchlorid.

Darüber hinaus sind als weitere Monomere (e) N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)butyl]methacrylamid, N-[2-(Diethylamino)ethyl]acrylamid, N-[2-(Diethylamino)ethyl]methacrylamid und Mischungen davon geeignet.

Ebenfalls geeignet sind die Quarternierungsprodukte der vorstehenden Verbindungen mit C₁-C₈ Alkylchlorid, C₁-C₈-Dialkylsulfat, C₁-C₁₆-Epoxiden oder Benzylchlorid.

Geeignete Monomere (e) sind weiterhin N-Vinylimidazole, Alkylvinylimidazole, insbesondere Methylvinylimidazole wie 1-Vinyl-2-methylimidazol, 3-Vinylimidazol-N-oxid, 2- und 4-Vinylpyridine, 2- und 4-Vinylpyridin-N-oxide sowie betainische Derivate und Quaternisierungsprodukte dieser Monomere.

Weiterhin geeignet als Monomer der Gruppe (e) ist Dialkyldiallylammoniumchlorid.

Die zuvor genannten Monomere (e) können einzeln oder in Form von beliebigen Mischungen eingesetzt werden.

Als Monomere (f) geeignet sind N-Vinylcarbonsäureamide der allgemeinen Formel (I) 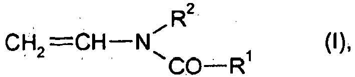 worin R¹ und R² unabhängig voneinander für H oder C₁- bis C₆-Alkyl stehen. Geeignete offenkettige N-Vinylamidverbindungen der Formel (I) sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid und Mischungen davon.

Weiterhin geeignet als Monomere (f) sind Ester α,β-ethylenisch ungesättigter Mono- und Dicarbonsäuren mit C₁-C₃₀-Alkanolen, C₂-C₃₀-Alkandiolen, Amide α,β-ethylenisch ungesättigter Monocarbonsäuren und deren N-Alkyl- und N,N-Dialkylderivate, Ester von Vinylalkohol und Allylalkohol mit C₁-C₃₀-Monocarbonsäuren, Vinylaromaten, Vinylhalogenide, Vinylidenhalogenide, C₂-C₈-Monoolefine und Mischungen davon.

Geeignete zusätzliche Monomere (f) sind z.B. Methyl(meth)acrylat, Methylethacrylat, Ethyl(meth)acrylat, Ethylethacrylat, n-Butyl(meth)acrylat, Isobutyl(meth)acrylat, tert.-Butyl(meth)acrylat, tert.-Butylethacrylat, n-Octyl(meth)acrylat, 1,1,3,3-Tetramethylbutyl(meth)acrylat, Ethylhexyl(meth)acrylat und Mischungen davon.

Geeignete zusätzliche Monomere (f) sind weiterhin (Meth)acrylamide und (Meth)acrylnitrile wie beispielsweise Acrylsäureamid, Methacrylsäureamid, N-Methyl(meth)acrylamid, N-Ethyl(meth)acrylamid, N-Propyl(meth)acrylamid, N-(n-Butyl)(meth)acrylamid, tert.-Butyl(meth)acrylamid, n-Octyl(meth)acrylamid, 1,1,3,3-Tetramethylbutyl(meth)acrylamid, Ethylhexyl(meth)acrylamid, Acrylnitril und Methacrylnitril und Mischungen davon.

Als weitere Monomere (f) sind 2-Hydroxyethyl(meth)acrylat, 2-Hydroxyethylethacrylat, 2-Hydroxypropyl(meth)acrylat, 3-Hydroxypropyl(meth)acrylat, 3-Hydroxybutyl(meth)acrylat, 4-Hydroxybutyl(meth)acrylat, 6-Hydroxyhexyl(meth)acrylat etc. und Mischungen davon geeignet.

Geeignete Monomere (f) sind weiterhin N-Vinyllactame und deren Derivate, die z.B. einen oder mehrere C₁-C₆-Alkylsubstituenten, wie Methyl, Ethyl, n-Propyl, Isopropyl, n-Butyl, sec.-Butyl, tert.-Butyl etc. aufweisen können. Dazu zählen z.B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam etc.

Geeignete zusätzliche Monomere (f) sind weiterhin Ethylen, Propylen, Isobutylen, Butadien, Styrol, α-Methylstyrol, Vinylchlorid, Vinylidenchlorid, Vinylfluorid, Vinylidenfluorid und Mischungen davon.

Die erfindungsgemäß eingesetzten wasserlöslichen amphoteren Copolymerisate für wässrige Anschlämmungen der Ausführungsform B sind beispielsweise erhältlich durch radikalische Polymerisation von
(b) 1 bis 99 Gew.-%, bevorzugt 5 bis 95 Gew.-%, insbesondere 10 bis 80 Gew.-%, bezogen auf das Gesamtgewicht der zur Polymerisation eingesetzten Monomere, wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
   1 bis 99 Gew.-%, bevorzugt 5 bis 95 Gew.-%, insbesondere 10 bis 80 Gew.-%, bezogen auf das Gesamtgewicht der zur Polymerisation eingesetzten Monomere, wenigstens einem Monomer, das ausgewählt ist aus der Untergruppe (b₂),
(e) 1 bis 99 Gew.-%, bevorzugt 5 bis 95 Gew.-%, insbesondere 20 bis 90 Gew.-%, bezogen auf das Gesamtgewicht der zur Polymerisation eingesetzten Monomere, wenigstens einem ethylenisch ungesättigten Monomer, das eine kationische Gruppe oder eine durch Protonierung kationisch aufladbare Gruppe trägt,
(f) 0 bis 30 Gew.-%, bevorzugt 0,1 bis 25 Gew.-%, insbesondere 1 bis 15 Gew.-%, bezogen auf das Gesamtgewicht der zur Polymerisation eingesetzten Monomere, wenigstens einem von den Komponenten (b) und (e) verschiedenen monoethylenisch ungesättigten Monomer, und
(d) 0 bis 5 Gew.-%, bevorzugt 0,0001 bis 3 Gew.-%, bezogen auf das Gesamtgewicht der zur Polymerisation eingesetzten Monomeren, wenigstens einer Verbindung, die mindestens zwei ethylenisch ungesättigte Doppelbindungen im Molekül aufweist.

Beispielsweise sind solche wasserlöslichen amphoteren Copolymerisate für wässrige Anschlämmungen der Ausführungsform B bevorzugt, die erhältlich sind durch Copolymerisieren von
(b) wenigstens einem Monomer aus der Gruppe (b₂), das ausgewählt ist aus monoethylenisch ungesättigten Carbonsäuren mit 3 bis 8 C-Atomen und den wasserlöslichen Salzen wie Alkalimetall-, Erdalkalimetall- und Ammoniumsalzen dieser Carbonsäuren,
(e) wenigstens einem ethylenisch ungesättigten Monomer, das ausgewählt ist aus der Gruppe der Ester von α,β-ethylenisch ungesättigten Mono- und Dicarbonsäuren mit C₂-C₁₂-Aminoalkoholen, die am Aminstickstoff C₁-C₈-monoalkyliert oder - dialkyliert sein können, sowie die Quaternisierungsprodukte dieser Ester mit C₁-C₈-Alkylchloriden, C₁-C₈-Dialkylsulfaten, C₁-C₁₆-Epoxiden oder Benzylchlorid,
(f) gegebenenfalls wenigstens einem von den Komponenten (b) und (e) verschiedenen monoethylenisch ungesättigten Monomer, das ausgewählt ist aus der Gruppe der N-Vinylcarbonsäureamide der allgemeinen Formel (I) 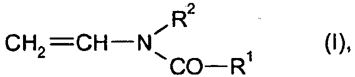 worin R¹ und R² unabhängig voneinander für H oder C₁- bis C₆-Alkyl stehen, (Meth)acrylamide und (Meth)acrylnitrile, und
(d) gegebenenfalls wenigstens eine Verbindung, die mindestens zwei ethylenisch ungesättigte Doppelbindungen im Molekül aufweist.

Besonders bevorzugt sind solche wasserlöslichen amphoteren Copolymerisate für wässrige Anschlämmungen der Ausführungsform B, die erhältlich sind durch Copolymerisieren von
(b) Acrylsäure, Methacrylsäure und/oder deren Alkali- oder Ammoniumsalzen,
(e) Dimethylaminoethyl(meth)acrylat Methochlorid,
(f) N-Vinylformamid, Acrylamid und/oder Acrylnitril.

Selbstverständlich sind auch Mischungen in jeder beliebigen Zusammensetzung der beiden Ausführungsformen A und B zur Herstellung der erfindungsgemäßen wässrigen Anschlämmungen von feinteiligen Füllstoffen möglich. Bevorzugt werden jedoch nur wasserlösliche amphotere Copolymerisate einer Ausführungsform eingesetzt.

Darüber hinaus sind auch Ausführungsformen von wasserlöslichen amphoteren Copolymerisaten möglich, die beliebige Mischungen der genannten Monomergruppen aus den beiden Ausführungsformen A und B enthalten.

Die Herstellung der wasserlöslichen amphoteren Copolymerisate, unabhängig davon, ob sie in wässrigen Anschlämmungen der Ausführungsform A oder B eingesetzt werden, erfolgt nach üblichen, dem Fachmann bekannten Verfahren. Geeignete Verfahren sind z. B. in der EP 0 251 182 A1, WO 94/13882 und EP 0 672 212 B1 beschrieben, worauf hier Bezug genommen wird. Weiterhin wird auf die Herstellung der in WO 04/087818 A1 und WO 05/012637 beschriebenen wasserlöslichen amphoteren Copolymerisate Bezug genommen.

Die Herstellung der wasserlöslichen amphoteren Copolymerisate kann durch Lösungs-, Fällungs-, Suspensions- oder Emulsionspolymerisation erfolgen. Bevorzugt ist die Lösungspolymerisation in wässrigen Medien. Geeignete wässrige Medien sind Wasser und Gemische aus Wasser und mindestens einem wassermischbaren Lösungsmittel, z. B. einem Alkohol, wie Methanol, Ethanol, n-Propanol, etc.

Die Polymerisationstemperaturen liegen vorzugsweise in einem Bereich von etwa 30 bis 200 °C, besonders bevorzugt 40 bis 110 °C. Die Polymerisation erfolgt üblicherweise unter atmosphärischem Druck, sie kann jedoch auch unter vermindertem oder erhöhtem Druck ablaufen. Ein geeigneter Druckbereich liegt zwischen 0,1 und 5 bar.

Die Säuregruppen-haltigen Monomere (b) werden vorzugsweise in der Salzform eingesetzt. Der pH-Wert wird zur Copolymerisation vorzugsweise auf einen Wert im Bereich von 6 bis 9 eingestellt. Durch Einsatz eines üblichen Puffers oder durch Messung des pH-Werts und entsprechende Zugabe von Säure oder Base kann der pH-Wert während der Polymerisation konstant gehalten werden.

Zur Herstellung der Polymerisate können die Monomeren mit Hilfe von Radikale bildenden Initiatoren polymerisiert werden.

Als Initiatoren für die radikalische Polymerisation können die hierfür üblichen Peroxo- und/oder Azo-Verbindungen eingesetzt werden, beispielsweise Alkali- oder Ammoniumperoxidisulfate, Diacetylperoxid, Dibenzoylperoxid, Succinylperoxid, Di-tert.-butylperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)-peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid, Azo-bis-isobutyronitril, Azo-bis-(2-amidonopropan)dihydrochlorid oder 2,2'-Azo-bis-(2-methyl-butyronitril). Geeignet sind auch Initiatormischungen oder Redox-Initiator-Systeme, wie z.B. Ascorbinsäure/Eisen(II)sulfat/Natriumperoxodisulfat, tert.-Butylhydroperoxid/Natriumdisulfit, tert.-Butylhydroperoxid/Natriumhydroxymethansulfinat, H₂O₂/Cul.

Zur Einstellung des Molekulargewichts kann die Polymerisation in Gegenwart wenigstens eines Reglers erfolgen. Als Regler können die üblichen, dem Fachmann bekannten Verbindungen, wie z. B. Schwefelverbindungen, z. B. Mercaptoethanol, 2-Ethylhexylthioglycolat, Thioglycolsäure, Natriumhypophosphit, Ameisensäure oder Dodecylmercaptan sowie Tribromchlormethan oder andere Verbindungen, die regelnd auf das Molekulargewicht der erhaltenen Polymerisate wirken, eingesetzt werden.

Die Molmasse der wasserlöslichen amphoteren Copolymerisate beträgt beispielsweise mindestens 10 000, vorzugsweise mindestens 100 000 Dalton und insbesondere mindestens 500 000 Dalton. Die Molmassen der Copolymerisate betragen dann z.B. 10 000 bis 10 Millionen, vorzugsweise 100 000 bis 5 Millionen (z.B. bestimmt durch Lichtstreuung). Dieser Molmassenbereich entspricht beispielsweise K-Werten von 5 bis 300, vorzugsweise 10 bis 250 (bestimmt nach H. Fikentscher in 5%iger wässriger Kochsalzlösung bei 25 °C und einer Polymerkonzentration von 0,1 Gew.-%).

Die wasserlöslichen amphoteren Copolymerisate können eine anionische oder eine kationische Überschußladung tragen oder auch elektrisch neutral sein, wenn gleich viele anionische und kationische Gruppen im Copolymerisat vorliegen. In Abhängigkeit vom Ladungszustand der wasserlöslichen amphoteren Copolymerisate sind die damit hergestellten wässrigen Anschlämmungen der Füllstoffe anionisch, kationisch oder elektrisch neutral, wenn die wasserlöslichen amphoteren Copolymerisate die gleiche Menge an kationischer and anionischer Ladung aufweisen.

Vorzugsweise werden solche wasserlöslichen amphoteren Copolymerisate eingesetzt, die bei pH 7 sowohl im anionischen als auch im kationischen Bereich eine Ladungsdichte von vorzugsweise höchstens 1 meq/g haben.

Die wasserlöslichen amphoteren Copolymerisate werden erfindungsgemäß zur Behandlung von feinteiligen Füllstoffen eingesetzt. Als Füllstoffe kommen alle üblicherweise in der Papierindustrie einsetzbaren Pigmente aus anorganischem Material in Betracht, z. B. Calciumcarbonat, das in Form von gemahlenen (GCC) Kalk, Kreide, Marmor oder präzipitiertem Calciumcarbonat (PCC) eingesetzt werden kann, Talkum, Kaolin, Bentonit, Satinweiß, Calciumsulfat, Bariumsulfat und Titandioxid. Man kann auch Mischungen aus zwei oder mehreren Pigmenten einsetzen. Der mittlere Teilchendurchmesser liegt beispielsweise im Bereich von 0,5 bis 30 µm, vorzugsweise zwischen 1 und 10 µm.

Weiterhin enthalten die erfindungsgemäßen wässrigen Anschlämmungen mindestens einen Latex, d.h. wenigstens ein wasserunlösliches Homo- oder Copolymerisat, der ebenfalls zur Behandlung der feinteiligen Füllstoffe eingesetzt wird.

Der Latex besteht vorzugsweise zu mindestens 40 Gew.-%, bevorzugt zu mindestens 60 Gew.-%, besonders bevorzugt zu mindestens 80 Gew.-% aus sogenannten Hauptmonomeren (g).

Die Hauptmonomeren (g) sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt sind Vinylether von 1 bis 4 C-Atome enthaltenden Alkoholen.

Als aliphatische Kohlenwasserstoffe mit 2 bis 8 C-Atomen und ein oder zwei olefinischen Doppelbindungen seien Ethylen, Propylen, Butadien, Isopren und Chloropren genannt.

Bevorzugte Hauptmonomere (g) sind C₁-C₂₀-Alkyl(meth)acrylate und Mischungen der Alkyl(meth)acrylate mit Vinylaromaten, insbesondere Styrol (zusammenfassend auch als Polyacrylat-Latex bezeichnet) oder Kohlenwasserstoffe mit 2 Doppelbindungen, insbesondere Butadien, oder Gemische von derartigen Kohlenwasserstoffen mit Vinylaromaten, insbesondere Styrol (zusammenfassen auch als Polybutadien-Latex bezeichnet).

Bei Polyacrylat-Latices kann das Gewichtsverhältnis von Alkyl(meth)acrylaten zu Vinylaromaten (insbesondere Styrol) z. B. 10:90 bis 90:10, vorzugsweise 20:80 bis 80:20 betragen.

Bei Polybutadien-Latices kann das Gewichtsverhältnis von Butadien zu Vinylaromaten (insbesondere Styrol) z. B. 10:90 bis 90:10, vorzugsweise 20:80 bis 80:20 betragen.

Neben den Hauptmonomeren (g) kann der Latex weitere Monomere (h) enthalten, z. B. Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fumarsäure und Aconitsäure. Der Gehalt an ethylenisch ungesättigten Säuren im Latex ist im Allgemeinen kleiner 10 Gew.-%.

Weitere Monomere (h) sind z. B. auch Hydroxylgruppen enthaltende Monomere, insbesondere C₁-C₁₀-Hydroxyalkyl(meth)acrylate, oder Amide wie (Meth)acrylamid.

Weitere Monomere (h) sind Verbindungen die mindestens zwei radikalisch polymerisierbare Doppelbindungen aufweisen, bevorzugt 2 bis 6, besonders bevorzugt 2 bis 4, ganz besonders bevorzugt 2 bis 3 und insbesondere 2. Derartige Verbindungen werden auch als Vernetzer bezeichnet.

Die mindestens zwei radikalisch polymerisierbaren Doppelbindungen der Vernetzer (h) können dabei ausgewählt sein aus der Gruppe bestehend aus (Meth)acryl-, Vinylether-, Vinylester-, Allylether- und Allylestergruppen. Beispiele für Vernetzer (h) sind 1,2-Ethandioldi(meth)acrylat, 1,3-Propandioldi(meth)acrylat, 1,2-Propandioldi(meth)acrylat, 1,4-Butandioldi(meth)acrylat, 1,6-Hexandioldi(meth)acrylat, Neopentylglykol-di(meth)acrylat, Trimethylolpropantrioldi(meth)acrylat, Pentaerythrittetra(meth)acrylat, 1,4-Butandioldivinylether, 1,6-Hexandioldivinylether, 1,4-Cyclohexandioldivinylether, Divinylbenzol, Allylacrylat, Allylmethacrylat, Methallylacrylat, Methallylmethacrylat, (Meth)Acrylsäure but-3-en-2-ylester, (Meth)Acrylsäure but-2-en-1-ylester, (Meth)Acrylsäure 3-methyl-but-2-en-1-ylester, Ester der (Meth)Acrylsäure mit Geraniol, Citronellol, Zimtalkohol, Glycerinmono- oder -diallylether, Trimethylolpropanmono- oder -diallylether, Ethylenglykolmonoallylether, Diethylenglykolmonoallylether, Propylenglykolmonoallylether, Dipropylenglykolmonoallylether, 1,3-Propandiolmonoallylether, 1,4-Butandiotmonoallylether sowie ferner Itaconsäurediallylester. Bevorzugt sind Allylacrylat, Divinylbenzol, 1,4-Butandioldiacrylat und 1,6-Hexandioldiacrylat.

Bevorzugt werden Polyacrylat-Latices eingesetzt, die aus Vinylaromaten, Alkyl(meth)acrylaten und weiteren hydrophilen Monomeren, wie beispielsweise (Meth)acrylnitril, (Meth)acrylamid und (Meth)acrylsäure, zusammengesetzt sind. Beispielsweise enthalten derartige bevorzugte Polyacrylat-Latices 20 - 50 Gew.-% Styrol, 30 - 80 Gew.-% Alkyl(meth)acrylate und 0-30 Gew.-% weitere hydrophile Monomere, wie beispielsweise (Meth)acrylnitril, (Meth)acrylamid und (Meth)acrylsäure.

Die Herstellung der Latices erfolgt in der Regel durch Emulsionspolymerisation, es handelt sich daher um ein Emulsionspolymerisat. Die Herstellung wäßriger Polymerisatdispersionen nach dem Verfahren der radikalischen Emulsionspolymerisation ist an sich bekannt (vgl. Houben-Weyl, Methoden der organischen Chemie, Band XIV, Makromolekulare Stoffe, loc. cit., Seiten 133ff).

Bei der Emulsionspolymerisation zur Herstellung der Latices werden ionische und/oder nicht-ionische Emulgatoren und/oder Schutzkolloide bzw. Stabilisatoren als grenzflächenaktive Verbindungen verwendet. Die grenzflächenaktive Substanz wird üblicherweise in Mengen von 0,1 bis 10 Gew.-%, insbesondere von 0,2 bis 3 Gew.-% bezogen auf die zu polymerisierenden Monomeren verwendet.

Gebräuchliche Emulgatoren sind z. B. Ammonium- oder Alkalimetallsalze höherer Fettalkoholsulfate, wie Na-n-Laurylsulfat, Fettalkoholphosphate, ethoxylierte C₈- bis C₁₀-Alkylphenole mit einem Ethoxylierungsgrad von 3 bis 30 sowie ethoxylierte C₈- bis C₂₅-Fettalkohole mit einem Ethoxylierungsgrad von 5 bis 50. Denkbar sind auch Gemische aus nichtionischen und ionischen Emulgatoren. Ferner geeignet sind phosphat- oder sulfatgruppenhaltige, ethoxylierte und/oder propoxylierte Alkylhenole und/oder Fettalkohole. Weitere geeignete Emulgatoren sind in Houben-Weyl, Methoden der organischen Chemie, Band XIV, Makromolekulare Stoffe, Georg Thieme Verlag, Stuttgart, 1961, Seiten 192 bis 209 aufgeführt.

Wasserlösliche Initiatoren für die Emulsionspolymerisation zur Herstellung der Latices sind z. B. Ammonium-und Alkalimetallsalze der Peroxidischwefelsäure, z. B. Natriumperoxodisulfat, Wasserstoffperoxid oder organische Peroxide, z. B. tert-Butylhydroperoxid.

Geeignet sind auch sogenannte Reduktions-Oxidations(Red-Ox)-Initiator Systeme.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Emulsionspolymerisation können Regler eingesetzt werden, z. B. in Mengen von 0 bis 3 Gew.-Teile, bezogen auf 100 Gew.-Teile der zu polymerisierenden Monomeren, durch die die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan oder Regler ohne Thiolgruppe, insbesondere z. B. Terpinolen.

Die Emulsionspolymerisation zur Herstellung der Latices erfolgt in der Regel bei 30 bis 130 °C, vorzugsweise bei 50 bis 100 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymer-saat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Im Anschluss an die (Co)Polymerisation können die im Latex enthaltenen Säuregruppen noch zumindest teilweise neutralisiert werden. Dies kann beispielsweise erfolgen mit Oxiden, Hydroxiden, Carbonaten oder Hydrogencarbonaten von Alkalimetallen oder Erdalkalimetallen, bevorzugt mit Hydroxiden, denen ein beliebiges Gegenion oder mehrere assoziiert sein kann, z.B. Li⁺, Na⁺, K⁺, Cs⁺, Mg²⁺, Ca²⁺ oder Ba²⁺. Weiterhin zur Neutralisierung geeignet sind Ammoniak oder Amine. Bevorzugt sind wässrige Ammoniumhydroxid-, Natriumhydroxid- oder Kaliumhydroxidlösungen.

Bei der Emulsionspolymerisation werden wässrige Dispersionen des Latices in der Regel mit Feststoffgehalten von 15 bis 75 Gew.-%, bevorzugt von 40 bis 75 Gew.-% erhalten.

Die Glasübergangstemperatur Tg der Latices liegt beispielsweise im Bereich von -30 bis 100 °C, bevorzugt im Bereich von -5 bis 70 °C und besonders bevorzugt im Bereich von 0 bis 40 °C (gemessen nach der DSC-Methode nach DIN EN ISO 11357).

Die Partikelgröße der Latices liegt vorzugsweise im Bereich von 10 bis 1000 nm, besonders bevorzugt im Bereich von 50 bis 300 nm (gemessen mit einem Malvern^{®} Autosizer 2 C).

Darüber können die erfindungsgemäßen wässrigen Anschlämmungen feinteiliger Füllstoffe neben den wasserlöslichen amphoteren Copolymerisaten und den Latices noch weitere Komponenten enthalten, die ebenfalls zur Behandlung der feinteiligen Füllstoffe eingesetzt werden. Bevorzugt wird als dritte Komponente zur Behandlung der feinteiligen Füllstoffe eine gequollene Stärke verwendet.

Diese gequollene Stärke ist unabhängig vom verwendeten Stärketyp von der üblicherweise in der Papierindustrie eingesetzten, vollständig aufgeschlossenen Stärke klar zu unterscheiden. Bei der üblicherweise eingesetzten, vollständig aufgeschlossenen Stärke sind die Stärkekörner vollständig aufgeplatzt, wobei die Stärke in molekulardisperser Form vorliegt. Im Gegensatz dazu ist die Stärke in den erfindungsgemäßen wässrigen Anschlämmungen gequollen, d.h. bei den Stärkepartikeln handelt es sich um gequollene, aber im Wesentlichen nicht-fragmentierte Stärkepartikel. Die Stärke ist gequollen, hat jedoch ihre granuläre Struktur beibehalten. Derart gequollene Stärkepartikel haben in Abhängigkeit vom eingesetzten Stärketyp in der Regel eine Größe im Bereich von 5 bis 90 µm, bevorzugt 30 bis 70 µm.

Gequollene Stärke wird durch Behandeln einer ungequollenen Stärke enthaltenen wässrigen Zusammensetzung mit heißem Wasser erhalten. Diese Behandlung erfolgt unterhalb der für den jeweiligen Stärketypen relevanten Gelatinierungstemperatur, so dass sichergestellt ist, dass die Stärkepartikel lediglich quellen und nicht aufplatzen. Die Temperatur des zugesetzten heißen Wassers sowie die Verweilzeit der Stärkekörner in der heißen Umgebung ist abhängig vom eingesetzten Stärketyp, in der Regel hat das heiße Wasser jedoch Temperaturen im Bereich von 50 bis 85 °C, bevorzugt im Bereich von 60 bis 80 °C und insbesondere bevorzugt im Bereich von 70 bis 75 °C.

Der Quellvorgang wird nach einer bestimmten Zeit, die abhängig vom eingesetzten Stärketyp und der Temperatur des heißen Wassers ermittelt werden muss, abgebrochen, bevorzugt in dem kaltes Wasser der warmen wässrigen Stärkemischung zugesetzt wird.

Das Quellen von Stärke ist in WO 03/087472 A1 beschrieben, auf die an dieser Stelle ausdrücklich Bezug genommen wird.

Als Stärketypen kommen alle in der Papierindustrie gängigen Stärken in Betracht, die sowohl anionisch, kationisch als auch amphoter sein können. Die mittleren Molmassen M_{w} der Stärken liegen beispielsweise im Bereich von 50 000 bis 150 000 000, bevorzugt im Bereich von 100 000 bis 100 000 000, besonders bevorzugt im Bereich von 200 000 bis 50 000 000. Die mittleren Molekurlagewichte M_{w} der Stärken können durch dem Fachmann bekannte Methoden ermittelt werden, z.B. mittels Gelpermeationschromatographie unter Verwendung eines Vielwinkellichtstreudetektors.

Als Stärketypen kommen native Stärken wie Kartoffel-, Weizen-, Mais-, Reis- oder Tapiokastärke in Betracht, wobei Kartoffelstärke bevorzugt ist. Ebenso können chemisch modifizierte Stärken wie Hydroxyethyl- oder Hydroxypropylstärken eingesetzt werden oder auch Stärken, die anionische Gruppen enthalten wie z. B. Phosphatstärke, oder auch kationisierte Stärken, die quaternäre Ammoniumgruppen enthalten, wobei ein Substitutionsgrad DS = 0,01 bis 0,2 bevorzugt ist. Der Substitutionsgrad DS gibt dabei die Zahl der kationischen Gruppen an, die durchschnittlich pro Glucoseeinheit in der Stärke enthalten sind. Besonders bevorzugt sind amphotere Stärken, die sowohl quaternäre Ammoniumgruppen als auch anionische Gruppen wie Carboxylat und/oder Phosphatgruppen enthalten und die gegebenenfalls auch chemisch modifiziert sein können, z.B. hydroxylalkyliert oder alkylverestert. Die Stärken können einzeln aber auch in beliebigen Mischungen untereinander eingesetzt werden.

Die Menge der gequollenen Stärke beträgt im Allgemeinen zwischen 0,1 und 10 Gew.-%, bevorzugt im Bereich von 0,2 bis 5 Gew.-% und besonders bevorzugt im Bereich von 0,5 bis 2,5 Gew.-%, jeweils bezogen auf den Füllstoff.

Wie zuvor beschrieben erfolgt die Herstellung der wässrigen Anschlämmungen, in dem man einer wässrigen Anschlämmung mindestens eines feinteiligen Füllstoffes mit 0,01 bis 5 Gew.-%, bezogen auf den Füllstoff, mindestens eines wasserlöslichen amphoteren Copolymerisats und mit 0,1 bis 10 Gew.-%, bezogen auf den Füllstoff, mindestens eines Latices behandelt.

Die Behandlung des feinteiligen Füllstoffs mit dem wasserlöslichen amphoteren Copolymerisat und dem Latex kann auf unterschiedliche Weise erfolgen. Prinzipiell ist jede denkbare Zusammenführung der drei Komponenten wasserlösliches amphoteres Copolymerisat, Latex und Füllstoff möglich.

Beispielsweise kann die Behandlung der wässrigen Anschlämmung mindestens eines feinteiligen Füllstoffs mit mindestens einem wasserlöslichen amphoteren Copolymerisat und mindestens einem Latex folgendermaßen erfolgen:
(A) Herstellung einer wässrigen Anschlämmung enthaltend mindestens einen feinteiligen Füllstoff, Zugabe einer wässrigen Dispersion mindestens eines Latices, anschließend Zugabe einer wässrigen Lösung mindestens eines wasserlöslichen amphoteren Copolymerisats zu dieser Füllstoff-Latex-Zusammensetzung, oder
(B) Herstellen einer wässrigen Anschlämmung enthaltend mindestens einen feinteiligen Füllstoff, Zugabe einer wässrigen Lösung mindestens einen wasserlöslichen amphoteren Copolymerisats, Zugabe einer wässrigen Dispersion mindestens eines Latices zu dieser Füllstoff-Copolymerisat-Zusammensetzung.

Zunächst erfolgt in allen Varianten die Herstellung einer wässrigen Anschlämmung von feinteiligen Füllstoffen, in die die beiden anderen Komponenten - wasserlösliches amphoteres Copolymerisat und Latex - nacheinander dosiert werden. Die Füllstoffe werden beispielsweise durch Einbringen in Wasser zu einer wässrigen Anschlämmung verarbeitet. Präzipitiertes Calciumcarbonat wird üblicherweise in Abwesenheit von Dispergiermitteln in Wasser aufgeschlämmt. Um wässrige Anschlämmungen der übrigen Füllstoffe herzustellen, verwendet man in der Regel ein anionisches Dispergiermittel, z. B. Polyacrylsäuren mit einer mittleren Molmasse M_{w} von beispielsweise 1 000 bis 40 000 Dalton. Falls man ein anionisches Dispergiermittel verwendet, so setzt man davon beispielsweise 0,01 bis 0,5 Gew.-% vorzugsweise 0,2 bis 0,3 Gew.-% zur Herstellung wässriger Füllstoffanschlämmungen ein. Die in Gegenwart von anionischen Dispergiermitteln in Wasser dispergierten feinteiligen Füllstoffe sind anionisch. Die wässrigen Anschlämmungen enthalten beispielsweise 10 bis 30 Gew.-%, meistens 15 - 25 Gew.-% mindestens eines Füllstoffs.

In einer bevorzugten Ausführungsform des erfindungsgemäßen Verfahrens wird unabhängig von der Zugabereihenfolge der einzelnen Komponenten zunächst die Stabilität der Latex-Dispersion reduziert. Im Allgemeinen kann eine Reduktion der Stabilität der Latex-Dispersion vorteilhaft sein, wodurch eine bessere Affinität des Latices auf der Pigmentoberfläche erzielt wird. Beispielsweise kann die Reduktion der Stabilität der Latex-Dispersion erreicht werden durch:
a) die wässrige Dispersion mindestens eines Latices wird vor der Zugabe auf bis zu 70°C erwärmt werden,
b) Veränderung des pH-Werts,
c) Zugabe von anorganischen Ionen mit gegensätzlicher Ladung zur Latex-Dispersion, insbesondere Zugabe von Ionen wie Ca²⁺ oder Al³⁺,
d) Zugabe von mehrfach geladenen organischen Verbindungen, die eine gegensätzliche Ladung zur Latex-Dispersion aufweisen,
e) Zugabe von Polyelektrolyten, die eine gegensätzliche Ladung zur Latex-Dispersion aufweisen,
f) Zugabe von organischen Lösungsmitteln, wie beispielsweise Aceton, oder
g) Zugabe von hydrophoben Gegenionen, wie beispielsweise Tetraalkylammoniumionen.

Wie zuvor beschrieben, können die wässrigen Anschlämmungen der feinteiligen Füllstoffe noch mit weiteren Komponenten behandelt werden, wobei es sich bevorzugt um mindestens eine gequollene Stärke handelt. Die Menge an gequollener Stärke beträgt im Allgemeinen zwischen 0,1 und 10 Gew.-%, bezogen auf den Füllstoff. Prinzipiell ist jede denkbare Zusammenführung aller Komponenten - Füllstoff, wasserlösliches amphoteres Copolymerisat, Latex und Stärke - möglich. Dabei ist es möglich, die Stärke sowohl im ungequollenen Zustand mindestens einem der anderen Komponenten beizumischen und das Quellen dann in Gegenwart dieser mindestens einen Komponente durchzuführen, als auch das Quellen der Stärke unabhängig von den anderen Komponenten durchzuführen und anschließend die gequollene Stärke mindestens einem der anderen Komponenten beizumischen.

Unabhängig von der Reihenfolge der Zugabe der wässrigen Anschlämmungen bzw. Lösungen der Komponenten - Füllstoff, wasserlösliches amphoteres Copolymerisat, Latex und ggf. Stärke - kann das Behandeln der wässrigen Anschlämmung von feinteiligen Füllstoffen mit den wasserlöslichen amphoteren Copolymerisaten, der Latices und ggf. der gequollenen Stärke kontinuierlich oder diskontinuierlich durchgeführt werden. Beim Zusammenbringen von wässrigen Anschlämmungen feinteiliger Füllstoffe, wässrigen Dispersionen von Latices, wässrigen Lösungen wasserlöslicher amphoterer Copolymerisaten und ggf. wässrigen Anschlämmungen von gequollener Stärke werden die Füllstoffteilchen zumindest teilweise mit den wasserlöslichen amphoteren Copolymerisaten, den Latices und ggf. der gequollenen Stärke überzogen bzw. imprägniert.

Das Mischen der Komponenten erfolgt beispielsweise in einem Scherfeld. Meistens ist es ausreichend, wenn man die Komponenten nach dem Zusammenbringen rührt oder sie in einem Scherfeld eines Ultraturraxgerätes behandelt. Das Zusammenbringen und Mischen der Bestandteile der wässrigen Anschlämmungen kann beispielsweise in dem Temperaturbereich von 0°C bis 60°C, vorzugsweise 10 bis 50°C erfolgen. Meistens mischt man die Komponenten bei der jeweiligen Raumtemperatur bis zu einer Temperatur von 40°C. Der pH-Wert der mit wasserlöslichen amphoteren Copolymerisaten und gequollener Stärke behandelten wässrigen Anschlämmungen von feinteiligen Füllstoffen beträgt beispielsweise 5 bis 11, vorzugsweise 6 bis 9, wobei der pH-Wert von Calciumcarbonat enthaltenden Anschlämmungen vorzugsweise mehr als 6,5 beträgt.

Die wasserlöslichen amphoteren Copolymerisate weisen eine größere Anzahl an die Polymerkette gebundene, ionisch dissoziierbarer/dissoziierter Gruppen entgegengesetzter Ladbarkeit/Ladung auf. Beim Inkontaktbringen mit wässrigen Anschlämmungen von feinteiligen Füllstoffen können Coulomb-Wechselwirkungen auftreten. So erfolgt bei dem Inkontaktbringen im Allgemeinen eine zumindest teilweise Belegung der Oberfläche der Polymerteilchen. Dies lässt sich beispielsweise durch Transmissionselektronenmikroskopie (TEM) nachweisen. Die Oberflächenladung kann zusätzlich durch Zeta-Potential-Messungen gemessen werden, die belegen, das die Ladung außen sitzt. Die elektrophoretische Mobilität bzw. das Zetapotential lassen sich laseroptisch bestimmen. Als Messinstrument dient z. B. ein Zetasizer 3000 HS der Firma Malvern Instruments Ltd..

Gegenstand der Erfindung ist die Verwendung der oben beschriebenen wässrigen Anschlämmungen als Zusatz zum Papierstoff bei der Herstellung von füllstoffhaltigem Papier, füllstoffhaltigem Karton oder füllstoffhaltiger Pappe durch Entwässern des Papierstoffs.

Im Detail handelt es sich hierbei um füllstoffhaltige Papiere wie z. B. holzfrei ungestrichenes Druck-, Schreib- oder Kopierpapier sowie holzhaltig ungestrichene Papiere wie z. B. aufgebessertes Zeitungsdruckpapier oder SC-Papiere für den Offset- bzw. Tiefdruckbereich. Durch die Behandlung des dem Papier zugesetzten Füllstoffes mit mindestens einem Latex in Kombination mit mindestens einem wasserlöslichen amphoteren Copolymer kann der Füllstoffgehalt des Papiers bei nahezu unveränderten Festigkeitseigenschaften deutlich erhöht werden. Die unter Verwendung der erfindungsgemäßen wässrigen Anschlämmungen erhaltenen füllstoffhaltigen Papiere, Kartons und Pappen weisen Festigkeitseigenschaften auf, die mit denen herkömmlicher Papiere mit niedrigem Feststoffgehalt vergleichbar sind.

Die nach dem oben beschriebenen Verfahren vorbehandelten Füllstoffe werden dem Faserstoff beigemischt, um so den Gesamtpapierstoff zu bilden. Neben den behandelten Füllstoffen und Faserstoffen kann der Gesamtstoff noch andere konventionelle Papieradditive enthalten. Dazu gehören beispielsweise Leimungsmittel wie Alkylketendimere (AKD), Alkenylbernsteinsäureanhydride (ASA), Harzleim, Nassfestmittel, kationische oder anionische Retentionsmittel auf der Basis synthetischer Polymere. Als Retentionsmittel kommen beispielsweise anionische Mikropartikel (kolloidale Kieselsäure, Bentonit), anionische Polyacrylamide, kationische Polyacrylamide, kationische Stärke, kationisches Polyethylenimin oder kationisches Polyvinylamin in Frage. Darüber hinaus sind beliebige Kombinationen davon denkbar, wie beispielsweise duale Systeme, die aus einem kationischen Polymer mit einem anionischen Mikropartikel oder einem anionischen Polymer mit einem kationischen Mikropartikel bestehen.

Die Erfindung wird anhand der folgenden, nicht einschränkenden Beispiele näher erläutert.

Die Prozentangaben in den Beispielen bedeuten Gewichtsprozent" sofern aus dem Zusammenhang nichts anderes hervorgeht.

In den Beispielen werden folgende wasserlöslichen amphoteren Copolymere eingesetzt:
- Copolymer 1:: wasserlösliches amphoteres Copolymer mit einem Molekulargewicht M_{w} von ca. 2 000 000 g/mol; mit einem Gehalt an 35 Mol-% Vinylformamideinheiten, 30 Mol-% Acrylsäureeinheiten und 35 Mol-% Vinylamin- und Amideinheiten
- Copolymer 2:: wasserlösliches amphoteres Copolymer mit einem Molekulargewicht M_{w} von ca. 500 000 g/mol, entsprechend Beispiel 1 aus WO 04/087818 A1; mit einem Gehalt an 40 Mol-% Vinylformadeinheiten, 30 Mol-% Acrylsäureeinheiten und 30 mol-% Vinylamin- und Amidineinheiten

### Beispiel 1

Eine 20 Gew.-%ige wässrige Anschlämmung von präzipitiertem Calciumcarbonat (PCC) wurde unter leichten Rühren auf 45 °C erwärmt. Zu 150 g dieser wässrigen PCC-Anschlämmung wurden unter leichtem Rühren 1,8 g einer 50 Gew.-%igen Dispersion eines anionischen Latex (Catiofast^{®} PR 5335 X, BASF Aktiengesellschaft) gemischt. Dieser Mischung wurden anschließend ebenfalls unter leichtem Rühren 0,6 g einer 10 Gew.-%igen wässrigen Lösung des amphoteren Copolymeren 1 beigemischt. Im Anschluss daran wurde die Gesamtmischung mit Hilfe eines Heiltof-Rührers bei 1000 Umdrehungen pro Minute (UpM) gerührt. Der pH-Wert der Mischung wurde anschließend auf 8,5 eingestellt.

### Beispiel 2

Eine 20 Gew.-%ige wässrige Anschlämmung von präzipitiertem Calciumcarbonat (PCC) wurde unter leichten Rühren auf 45°C erwärmt. Zu 150 g dieser wässrigen PCC-Anschlämmung wurden unter leichtem Rühren 0,6 g einer 10 Gew.-%igen wässrigen Lösung des amphoteren Copolymeren 1 gemischt. Dieser Mischung wurden anschließend ebenfalls unter leichtem Rühren 1,8 g einer 50 Gew.-%igen Dispersion eines anionischen Latex (Catiofast^{®} PR 5335 X, BASF Aktiengesellschaft) beigemischt. Im Anschluss daran wurde die Gesamtmischung mit Hilfe eines Heiltof-Rührers bei 1000 UpM gerührt. Der pH-Wert der Mischung wurde anschließend auf 8,5 eingestellt.

### Beispiel 3

In einem Becherglas wurden 0,6 g einer 10 Gew.-%igen wässrigen Lösung des amphoteren Copolymeren 1 vorgelegt und anschließend mit 30 g Wasser verdünnt. Anschließend gab man unter leichtem Rühren 1,8 g einer 50 Gew.-%igen Dispersion eines anionischen Latex (Catiofast^{®} PR 5335 X, BASF Aktiengesellschaft) zu. Im Anschluss daran wurden 150 g einer 20 Gew.-%igen Anschlämmung von präzipitiertem Calciumcarbonat (PCC) in Wasser zugegeben, die zuvor auf 45°C erwärmt worden war. Während der Zugabe der PCC-Slurry und danach wurde die Mischung mit Hilfe eines Heiltof-Rührers bei 1000 UpM gerührt. Der pH-Wert der Mischung wird anschließend auf 8,5 eingestellt.

### Beispiel 4

Eine 30 Gew.-%ige wässrige Anschlämmung eines handelsüblichen Kaolin-Clays wurde unter leichtem Rühren auf 55 °C erwärmt. Zu 150 g dieser wässrigen Kaolin-Clay-Anschlämmung wurden unter leichtem Rühren 2,7 g einer 50 Gew.-%igen Dispersion eines anionischen Latex (Catiofast^{®} PR 5335 X, BASF Aktiengesellschaft) gemischt. Dieser Mischung wurden anschließend ebenfalls unter leichtem Rühren 0,9 g einer 10 Gew.-%igen wässrigen Lösung des amphoteren Copolymeren 1 beigemischt. Im Anschluss daran wurde die Gesamtmischung mit Hilfe eines Heiltof-Rührers bei 1000 UpM gerührt. Der pH-Wert der Mischung wird anschließend auf 8,5 eingestellt.

### Beispiel 5

Eine 30 Gew.-%ige wässrige Anschlämmung eines handelsüblichen Kaolin-Clays wurde unter leichtem Rühren auf 55 °C erwärmt. Zu 150 g dieser wässrigen Kaolin-Anschlämmung wurden unter leichtem Rühren 0,9 g einer 10 Gew.-%igen wässrigen Lösung des amphoteren Copolymeren 1 gemischt. Dieser Mischung wurden anschließend ebenfalls unter leichtem Rühren 2,7 g einer 50 Gew.-%igen Dispersion eines anionischen Latex (Catiofast^{®} PR 5335 X, BASF Aktiengesellschaft) beigemischt. Im Anschluss daran wurde die Gesamtmischung mit Hilfe eines Heiltof-Rührers bei 1000 UpM gerührt. Der pH-Wert der Mischung wurde anschließend auf 8,5 eingestellt.

### Beispiel 6

In einem Becherglas wurden 0,9 g einer 10 Gew.-%igen wässrigen Lösung des amphoteren Copolymeren 1 vorgelegt und anschließend mit 30 g Wasser verdünnt. Anschließend gab man unter leichtem Rühren 2,7 g einer 50 Gew.-%igen Dispersion eines anionischen Latex (Catiofast^{®} PR 5335 X, BASF Aktiengesellschaft) zu. Im Anschluss daran wurden 150 g einer 30 Gew.-%igen Anschlämmung eines handelsüblichen Kaolin-Clays in Wasser zu, die zuvor auf 55 °C erwärmt worden war. Während der Zugabe der Kaolin-Clay-Slurry und danach wurde die Mischung mit Hilfe eines Heiltof-Rührers bei 1000 UpM gerührt. Der pH-Wert der Mischung wurde anschließend auf 8,5 eingestellt.

### Vergleichsbeispiel 1 (Vergleich nach WO 04/087818 A1, Beispiel 1)

In einem Becherglas wurden 1 g einer 12 Gew.-%igen wässrigen Lösung des amphoteren Copolymeren 2 vorgelegt und anschließend mit 30 g Wasser verdünnt. Anschließend gab man 150 g einer 20 Gew.-%igen Anschlämmung von präzipitiertem Calciumcarbonat (PCC) in Wasser zu, die zuvor auf eine Temperatur von 45 °C erwärmt worden war. Während der Zugabe der PCC-Slurry und danach wurde die Mischung mit Hilfe eines Heiltof-Rührers bei 1000 UpM gerührt. Der pH-Wert der Mischung wurde anschließend auf 8,5 eingestellt.

### Vergleichsbeispiel 2 (Vergleich nach WO 04/087818 A1, Beispiel 7)

In einem Becherglas wurden 1,5 g einer 12 Gew.-%igen wässrigen Lösung des amphoteren Copolymeren 2 vorgelegt und anschließend mit 30 g Wasser verdünnt. Anschließend gab man 150 g einer 30 Gew.-%igen Anschlämmung eines handelsüblichen Kaolin-Clays in Wasser zu, die zuvor auf eine Temperatur von 45 °C erwärmt worden war. Während der Zugabe der Kaolin-Clay-Slurry und danach wurde die Mischung mit Hilfe eines Heiltof-Rührers bei 1000 UpM gerührt. Der pH-Wert der Mischung wurde anschließend auf 8,5 eingestellt.

### Vergleichsbeispiel 3 (Vergleich nach WO 03/087472 A1)

Kationische Wachsmaisstärke mit einem Substitutionsgrad von 0,035 wurde mit Wasser bei 25 °C zu einer 20 Gew.-%igen Slurry aufgeschlämmt. Anschließend wurden 1,8 g einer 50 Gew.-%igen Dispersion eines anionischen Latex (Catiofast^{®} PR 5335 X, BASF Aktiengesellschaft) zugemischt. Diese Mischung wurde anschließend mit 400 ml heißem Wasser (75 °C) verdünnt und für 90 Sekunden leicht umgerührt. Dann entnahm man 25 ml der verdünnten Slurry und legte diese in einem Becherglas vor. Anschließend gab man 150 g einer 20 Gew.-%igen wässrigen Anschlämmung von präzipitiertem Calciumcarbonat (PCC) unter leichtem Rühren zu, die bei Raumtemperatur (ca. 25 °C) belassen worden war. Während der Zugabe der PCC-Slurry und danach wurde die Mischung mit Hilfe eines Heiltof-Rührers bei 1000 UpM gerührt. Der pH-Wert der Mischung wurde anschließend auf 8,5 eingestellt.

### Vergleichsbeispiel 4 (Vergleich nach WO 03/087472 A1)

Kationische Wachsmaisstärke mit einem Substitutionsgrad von 0,035 wurde mit Wasser bei 25 °C zu einer 30 Gew.-%igen Slurry aufgeschlämmt. Anschließend wurden 2,7 g einer 50 Gew.-%igen Dispersion eines anionischen Latex (Catiofast^{®} PR 5335 X, BASF Aktiengesellschaft) zugemischt. Diese Mischung wurde anschließend mit 400 ml heißem Wasser (75 °C) verdünnt und für 90 Sekunden leicht umgerührt. Dann entnahm man 25 ml der verdünnten Slurry und legte diese in einem Becherglas vor. Anschließend gab man 150 g einer 30 Gew.-%igen wässrigen Anschlämmung eines handelsüblichen Kaolin-Clays unter leichtem Rühren zu, die bei Raumtemperatur (ca. 25 °C) belassen worden war. Während der Zugabe der Kaolin-Clay-Slurry und danach wurde die Mischung mit Hilfe eines Heiltof-Rührers bei 1000 UpM gerührt. Der pH-Wert der Mischung wurde anschließend auf 8,5 eingestellt.

### Herstellung von füllstoffhaltigem Papier

### Papiere vom Typ A

### Beispiele 7-15

### Vergleichsbeispiele 5-13

Eine Mischung aus gebleichtem Birkensulfat und gebleichtem Kiefernsulfit wurde im Verhältnis von 70/30 bei einer Feststoffkonzentration von 4 % im Laborpulper stippenfrei aufgeschlagen, bis ein Mahlgrad von 30 - 35 erreicht wurde. Dem aufgeschlagenen Stoff wurde anschließend ein optischer Aufheller (Blankophor® PSG, Bayer AG) sowie eine kationische Stärke (HiCat® 5163 A) zugegeben. Der Aufschluss der kationischen Stärke erfolgte als 10 Gew.-%ige Stärkeslurry in einem Jet-Kocher bei 130°C und 1 Minute Verweilzeit. Die Dosiermenge des optischen Aufhellers betrug 0,5 Gew.-% Handelsware, bezogen auf den Trockengehalt der Papierstoff=̂suspension. Die Dosiermenge der kationischen Stärke betrug 0,5 Gew.-% Stärke, bezogen auf den Trockengehalt der Papierstoffsuspension. Der pH-Wert des Stoffs lag dabei im Bereich zwischen 7 und 8. Der gemahlene Stoff wurde anschließend durch Zugabe von Wasser auf eine Feststoffkonzentration von 0,35 Gew.-% verdünnt.

Um das Verhalten der oben beschriebenen wässrigen Füllstoff-Slurries bei der Herstellung von füllstoffhaltigem Papier zu ermitteln, legte man jeweils 500 ml der Papierstoffsuspension vor und dosiert jeweils in diese Pulpe die gemäß den Beispielen behandelten Slurries sowie ein kationisches Polyacrylamid als Retentionsmittel (Polymin^{®} KE 440, BASF Aktiengesellschaft). Die Dosiermenge des Retentionsmittels betrug in allen Fällen jeweils 0,01 Gew.-% Polymer, bezogen auf den Trockengehalt der Papierstoffsuspension.

Anschließend wurden Blätter mit den oben beschriebenen vorbehandelten Füllstoffen gebildet (Beispiele 7-15 und Vergleichsbeispiele 5-10). Die dazu eingesetzte Füllstoffmenge wurde so angepasst, dass die Füllstoffgehalte ca. 20 %, 30 % bzw. 40 % betrugen. Im Falle der vorbehandelten Füllstoffe ist die eingesetzte Slurrymenge, die eingesetzt werden muss, um einen bestimmten Zielwert zu erreichen, stets geringer als im Falle der unbehandelten Füllstoffe.

Zu jedem der vorbehandelten Füllstofftypen wurden außerdem Vergleichsbeispiele mit unbehandeltem Füllstoff durchgeführt (Vergleichsbeispiele 11 - 13). Dazu wurde zunächst in Vorversuchen die Menge an unbehandelter Füllstoffslurry ermittelt, die nötig ist, um einen Füllstoffgehalt von ca. 20 %, 30 % bzw. 40 % einzustellen. Anschließend wurden Blätter mit den unbehandelten Füllstoffen gebildet.

Die Papierblätter wurden jeweils auf einem Rapid-Köthen-Blattbildner nach ISO 5269/2 mit einem Blattgewicht von 70 g/m² gefertigt und anschließend 7 Minuten bei 90°C getrocknet.

### Papiere vom Typ B

### Beispiele 16-24

### Vergleichsbeispiele 14-22

Eine Mischung aus TMP (thermo-mechanical pulp) und Holzschliff wurde im Verhältnis von 70/30 bei einer Feststoffkonzentration von 4 % im Laborpulper stippenfrei aufgeschlagen, bis ein Mahlgrad von 45 SR erreicht wurde. Der pH-Wert des Stoffs lag dabei im Bereich zwischen 7 und 8. Der gemahlene Stoff wurde durch Zugabe von Wasser auf eine Feststoffkonzentration von 0,35 Gew.-% verdünnt.

Um das Verhalten der oben beschriebenen wässrigen Füllstoff-Slurries bei der Herstellung von füllstoffhaltigem Papier zu ermitteln, legte man jeweils 500 ml der Papierstoffsuspension vor und dosiert jeweils in diese Pulpe die gemäß den Beispielen und den Vergleichsbeispielen behandelten Slurries, sowie ein kationisches Polyacrylamid als Retentionsmittel (Polymin^{®} KE 440, BASF Aktiengesellschaft). Die Dosiermenge des Retentionsmittels betrugt jeweils 0,01 Gew.-% Polymer, bezogen auf den Trockengehalt der Papierstoffsuspension.

Anschließend wurden Blätter mit den oben beschriebenen vorbehandelten Füllstoffen gebildet (Beispiele 16-24 und Vergleichsbeispiele 14-19). Die dazu eingesetzte Füllstoffmenge wurde so angepasst, dass die Füllstoffgehalte ca. 20 %, 30 % bzw. 40 % betrugen. Im Falle der vorbehandelten Füllstoffe ist die eingesetzte Slurrymenge, die eingesetzt werden muss, um einen bestimmten Zielwert zu erreichen, stets geringer als im Falle der unbehandelten Füllstoffe.

Zu jedem der vorbehandelten Füllstofftypen wurden außerdem Vergleichsbeispiele mit unbehandeltem Füllstoff durchgeführt (Vergleichsbeispiele 20 - 22 ). Dazu wurde zunächst in Vorversuchen die Menge an unbehandelter Füllstoffslurry ermittelt, die nötig ist, um einen Füllstoffgehalt von ca. 20 %, 30 % bzw. 40 % einzustellen. Anschließend wurden Blätter mit den unbehandelten Füllstoffen gebildet.

Die Papierblätter wurden jeweils auf einem Rapid-Köthen-Blattbildner nach ISO 5269/2 mit einem Blattgewicht von 80 g/m² gefertigt und anschließend 7 Minuten bei 90°C getrocknet und danach mit einem Liniendruck von 200 N/cm kalandriert.

### Prüfung der Papierblätter vom Typ A

Nach einer Lagerzeit im Klimaraum bei konstant 23°C und 50 % Luftfeuchtigkeit für 12 Stunden wurden die Trockenreißlänge der Blätter nach DIN 54540, die innere Festigkeit nach DIN 54516 und die Biegesteifigkeit nach DIN 53121 ermittelt. Die Ergebnisse sind in Tabelle 1 angegeben. Die Slurries entsprechend den Vergleichsbeispielen bzw. die Vergleichsbeispiele mit den daraus hergestellten Papierblättern sind mit dem Zusatz (VB) gekennzeichnet. Bei den anderen Beispielen handelt es sich um erfindungsgemäße Beispiele.

### Prüfung der Papierblätter vom Typ B

Nach einer Lagerzeit im Klimaraum bei konstant 23°C und 50 % Luftfeuchtigkeit für 12 Stunden wurden die Trockenreißlänge der Blätter nach DIN 54540 und die innere Festigkeit nach DIN 54516 ermittelt. Die Trockenrupffestigkeit der Papiere wurde mit dem IGT-Bedruckbarkeitsprüfer (ISO 3783) ermittelt. Die Ergebnisse sind in Tabelle 2 angegeben. Die Slurries entsprechend den Vergleichsbeispielen bzw. die Vergleichsbeispiele mit den daraus hergestellten Papierblättern sind mit dem Zusatz (VB) gekennzeichnet. Bei den anderen Beispielen handelt es sich um erfindungsgemäße Beispiele.

**Tabelle 1 (Prüfung der Papierblätter vom Typ A)**

| Beispiel bzw. Vergleichsbeispiel (VB) | Slurry nach Beispiel bzw. Vergleichsbeispiel (VB) | Füllstoffgehalt [%] | Trockenreislänge [m] | Innere Festigkeit [N] | Biege-Steifigkeit [mN] |
|---|---|---|---|---|---|
| 7 | 1 | 19,8 | 5391 | 343 | 83,7 |
| 8 | 1 | 29,9 | 4736 | 279 | 63,5 |
| 9 | 1 | 39,2 | 4011 | 242 | 46,8 |
| 10 | 2 | 21,3 | 5135 | 324 | 76,1 |
| 11 | 2 | 29,1 | 4447 | 261 | 58,9 |
| 12 | 2 | 40,3 | 3735 | 187 | 42,7 |
| 13 | 3 | 19,4 | 5367 | 341 | 83,5 |
| 14 | 3 | 28,9 | 4379 | 264 | 61,1 |
| 15 | 3 | 38,9 | 3698 | 179 | 46,3 |
| 5 (VB) | 1 (VB) | 20,2 | 4675 | 257 | 78,4 |
| 6 (VB) | 1 (VB) | 29,5 | 3701 | 153 | 43,9 |
| 7 (VB) | 1 (VB) | 40,3 | 2815 | 101 | 30,5 |
| 8 (VB) | 3 (VB) | 21,1 | 5189 | 305 | 76,1 |
| 9 (VB) | 3 (VB) | 30,9 | 4212 | 234 | 46,9 |
| 10 (VB) | 3 (VB) | 39,4 | 3218 | 167 | 33,5 |
| 11 (VB) | PCC ohne Vorbehandlung | 19,8 | 4291 | 214 | 76,3 |
| 12 (VB) | PCC ohne Vorbehandlung | 31,2 | 3286 | 143 | 43,5 |
| 13 (VB) | PCC ohne Vorbehandlung | 40,1 | 2387 | 79 | 26,9 |

**Tabelle 2 (Prüfung der Papierblätter vom Typ B)**

| Beispiel bzw. Vergleichsbeispiel (VB) | Slurry nach Beispiel bzw. Vergleichsbeispiel (VB) | Füllstoffgehalt [%] | Trocknereislänge [m] | Innere Festigkeit J/sqm | IGT |
|---|---|---|---|---|---|
| 16 | 4 | 20,6 | 4331 | 326 | Sehr gut |
| 17 | 4 | 29,5 | 3328 | 261 | Sehr gut |
| 18 | 4 | 38,8 | 2519 | 211 | Gut |
| 19 | 5 | 20,4 | 4278 | 319 | Sehr gut |
| 20 | 5 | 28,6 | 3481 | 272 | Sehr gut |
| 21 | 5 | 40,9 | 2567 | 223 | Gut |
| 22 | 6 | 19,9 | 4289 | 308 | Sehr gut |
| 23 | 6 | 29,3 | 3391 | 255 | Sehr gut |
| 24 | 6 | 38,7 | 2459 | 198 | Gut |
| 14 (VB) | 2 (VB) | 20,9 | 3467 | 224 | Gut |
| 15 (VB) | 2 (VB) | 28,8 | 2634 | 157 | Mäßig |
| 16 (VB) | 2 (VB) | 40,8 | 1954 | 97 | schlecht |
| 17 (VB) | 4 (VB) | 21,5 | 3876 | 243 | Sehr gut |
| 18 (VB) | 4 (VB) | 30,2 | 2976 | 189 | Gut |
| 19 (VB) | 4 (VB) | 39,9 | 2274 | 149 | Mäßig |
| 20 (VB) | Kaolin-Clay ohne Vorbehandlung | 18,9 | 3275 | 206 | Gut |
| 21 (VB) | Kaolin-Clay ohne Vorbehandlung | 30,5 | 2451 | 146 | Schlecht |
| 22 (VB) | Kaolin-Clay ohne Vorbehandlung | 41,1 | 1790 | 88 | Schlecht |

## Patentansprüche

1. Verwendung von wässrige Anschlämmungen von feinteilige Füllstoffen, die zumindest teilweise mit einer Zusammensetzung aus mindestens einem wasserlöslichen amphoteren Copolymerisat und mindestens einem Latex überzogen sind als Zusatz zum Papierstoff bei der Herstellung von füllstoffhaltigem Papier, füllstoffhaltigem Karton oder füllstoffhaltiger Pappe durch Entwässern des Papierstoffs.

2. Verwendung nach Anspruch 1, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einem Latex, wobei das wasserlösliche amphotere Copolymerisat erhältlich ist durch Copolymerisieren eines Monomergemischs von
(a) wenigstens einem N-Vinylcarbonsäureamid der allgemeinen Formel 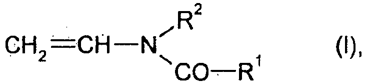 worin R¹ und R² unabhängig voneinander für H oder C₁- bis C₆-Alkyl stehen,
(b) wenigstens einem Monomer, das ausgewählt ist aus der Gruppe bestehend aus
(b₁) monoethylenisch ungesättigten Sulfonsäuren, Phosphonsäuren, Phosphorsäureestern und Derivaten davon, und
(b₂) monoethylenisch ungesättigten Mono- und Dicarbonsäuren, deren Salzen und Dicarbonsäureanhydriden,
(c) gegebenenfalls wenigstens einem von den Komponenten (a) und (b) verschiedenen monoethylenisch ungesättigten Monomer, und
(d) gegebenenfalls wenigstens eine Verbindung, die mindestens zwei ethylenisch ungesättigte Doppelbindungen im Molekül aufweist,
mit der Maßgabe, dass das Monomerengemisch mindestens ein Monomer (b) mit mindestens einer freien Säuregruppe und/oder einer Säuregruppe in Salzform enthält,
und anschließende teilweise oder vollständige Hydrolyse der Gruppen -CO-R¹ aus den in das Copolymerisat einpolymerisierten Monomeren (a).

3. Verwendung nach einem der vorstehenden Ansprüche, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einem Latex, wobei das wasserlösliche amphotere Copolymerisat erhältlich ist durch Copolymerisieren eines Monomergemischs von
(a) wenigstens einem N-Vinylcarbonsäureamid der allgemeinen Formel 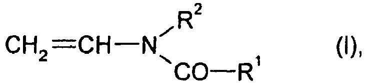 worin R¹ und R² unabhängig voneinander für H oder C₁- bis C₆-Alkyl stehen,
(b) wenigstens einem Monomer aus der Gruppe (b₂), das ausgewählt ist aus monoethylenisch ungesättigten Carbonsäuren mit 3 bis 8 C-Atomen und den wasserlöslichen Salzen wie Alkalimetall-, Erdalkalimetall- und Ammoniumsalzen dieser Carbonsäuren,
(c) gegebenenfalls wenigstens einem von den Komponenten (a) und (b) verschiedenen monoethylenisch ungesättigten Monomer, und
(d) gegebenenfalls wenigstens eine Verbindung, die mindestens zwei ethylenisch ungesättigte Doppelbindungen im Molekül aufweist,
und anschließende teilweise oder vollständige Hydrolyse der Gruppen -CO-R¹ aus den in das Copolymerisat einpolymerisierten Monomeren (a).

4. Verwendung nach einem der vorstehenden Ansprüche, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einem Latex, wobei das wasserlösliche amphotere Copolymerisat erhältlich ist durch Copolymerisieren eines Monomergemischs von
(a) N-Vinylformamid,
(b) Acrylsäure, Methacrylsäure und/oder deren Allkalimetall- oder Ammoniumsalzen, und
(c) gegebenenfalls anderen monoethylenisch ungesättigten Monomeren,
und anschließende teilweise oder vollständige Hydrolyse der in den Copolymerisaten enthaltenen Vinylformamideinheiten.

5. Verwendung nach einem der vorstehenden Ansprüche, **dadurch gekennzeichnet, dass** die Hydrolyse der in den Copolymerisaten enthaltenen Vinylformaideinheiten durch Einwirkung von Säuren, Basen oder Enzymen erfolgt.

6. Verwendung nach einem der vorstehenden Ansprüche, **dadurch gekennzeichnet, dass** der Hydrolysegrad der einpolymerisierten Vinylcarbonsäureamidgruppen 0,1 bis 100 Mol-% beträgt.

7. Verwendung nach einem der vorstehenden Ansprüche, **dadurch gekennzeichnet, dass** die hydrolysierten Copolymerisate
(i) 1 bis 98 Mol-%, vorzugsweise 1 bis 75 Mol-% Vinylcarbonsäureamideinheiten,
(ii) 1 bis 98 Mol-%, vorzugsweise 1 bis 55 Mol-% Einheiten von monoethylenisch ungesättigten Sulfonsäuren, Phosphonsäuren, Phosphorsäureestern, Derivaten davon, oder Einheiten von monoethylenisch ungesättigten Mono- und Dicarbonsäuren, deren Salzen und Dicarbonsäureanhydriden, bevorzugt 1 bis 98 Mol-%, vorzugsweise 1 bis 55 Mol-% Einheiten mindestens einer monoethylenisch ungesättigten Carbonsäure mit 3 bis 8 C-Atomen,
(iii) 1 bis 98 Mol-%, vorzugsweise 1 bis 55 Mol-% Vinylamineinheiten der Formel (II) und/oder Amidineinheiten der Formel (III) und/oder (IV) 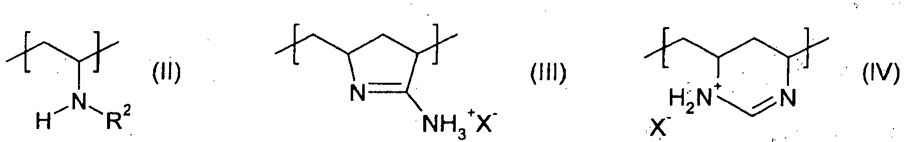 wobei in den Amidineinheiten (III) und (IV) X jeweils ein Anion bedeutet, und
(iv) bis zu 30 Mol-% Einheiten von anderen monoethylenisch ungesättigten Verbindungen
enthalten.

8. Verwendung nach einem der vorstehenden Ansprüche, **dadurch gekennzeichnet, dass** die hydrolysierten Copolymerisate
(i) 5 bis 70 Mol-% Vinylcarbonsäureamideinheiten,
(ii) 3 bis 30 Mol-% Einheiten von monoethylenisch ungesättigten Sulfonsäuren, Phosphonsäuren und Salzen davon, oder 5 bis 45 Mol-% Einheiten von Acrylsäure, Methacrylsäure, Salzen und Gemischen davon,
bevorzugt 15 bis 45 Mol-% Acrylsäure- und/oder Methacrylsäureeinheiten, und
(iii) 10 bis 50 Mol-% Vinylamineinheiten in Salzform und/oder Amidineinheiten der Formel (III) und/oder (IV)
enthalten.

9. Verwendung nach Anspruch 1, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einem Latex, wobei das wasserlösliche amphotere Copolymerisat erhältlich ist durch Copolymerisieren eines Monomergemischs von
(b) wenigstens einem Monomer, das ausgewählt ist aus der Gruppe bestehend aus
(b₁) monoethylenisch ungesättigten Sulfonsäuren, Phosphonsäuren, Phosphorsäureestern und Derivaten davon, und
(b₂) monoethylenisch ungesättigten Mono- und Dicarbonsäuren, deren Salzen und Dicarbonsäureanhydriden,
(e) wenigstens einem ethylenisch ungesättigten Monomer, das eine kationische Gruppe und/oder eine durch Protionierung kationisch aufladbare Gruppe trägt,
(f) gegebenenfalls wenigstens einem von den Komponenten (b) und (e) verschiedenen monoethylenisch ungesättigten Monomer, und
(d) gegebenenfalls wenigstens eine Verbindung, die mindestens zwei ethylenisch ungesättigte Doppelbindungen im Molekül aufweist.

10. Verwendung nach Anspruch 1 oder 9, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einem Latex, wobei das wasserlösliche amphotere Copolymerisat erhältlich ist durch Copolymerisieren eines Monomergemischs von
(b) wenigstens einem Monomer aus der Gruppe (b₂), das ausgewählt ist aus monoethylenisch ungesättigten Carbonsäuren mit 3 bis 8 C-Atomen und den wasserlöslichen Salzen wie Alkalimetall-, Erdalkalimetall- und Ammoniumsalzen dieser Carbonsäuren,
(e) wenigstens einem ethylenisch ungesättigten Monomer, das ausgewählt ist aus der Gruppe der Ester von α,β-ethylenisch ungesättigten Mono- und Dicarbonsäuren mit C₂-C₁₂-Aminoalkoholen, die am Aminstickstoff C₁-C₈-monoalkyliert oder -dialkyliert sein können, sowie die Quaternisierungsprodukte dieser Ester mit C₁-C₈-Alkylchloriden, C₁-C₈-Dialkylsulfaten, C₁-C₁₆-Epoxiden oder Benzylchlorid,
(f) gegebenenfalls wenigstens einem von den Komponenten (b) und (e) verschiedenen monoethylenisch ungesättigten Monomer, das ausgewählt ist aus der Gruppe der N-Vinylcarbonsäureamide der allgemeinen Formel (I) 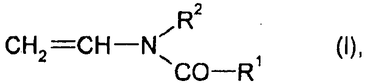 worin R¹ und R² unabhängig voneinander für H oder C₁- bis C₆-Alkyl stehen, (Meth)acrylamide und (Meth)acrylnitrile, und
(d) gegebenenfalls wenigstens eine Verbindung, die mindestens zwei ethylenisch ungesättigte Doppelbindungen im Molekül aufweist.

11. Verwendung nach Anspruch 1, 9 oder 10, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einem Latex, wobei das wasserlösliche amphotere Copolymerisat erhältlich ist durch Copolymerisieren eines Monomergemischs von
(b) Acrylsäure, Methacrylsäure und/oder deren Alkali- oder Ammoniumsalzen,
(e) Dimethylaminoethyl(meth)acrylat Methochlorid,
(f) N-Vinylformamid, Acrylamid und/oder Acrylnitril.

12. Verwendung nach einem der vorstehenden Ansprüche, **dadurch gekennzeichnet, dass** die wässrige Anschlämmung 1 bis 70 Gew.-% mindestens eines feinteiligen Füllstoffs enthält.

13. Verwendung nach einem der vorstehenden Ansprüche, **dadurch gekennzeichnet, dass** die Menge an wasserlöslichem amphoteren Copolymerisat 0,01 bis 5 Gew.-%, bezogen auf den Füllstoff, beträgt.

14. Verwendung nach einem der vorstehenden Ansprüche, **dadurch gekennzeichnet, dass** der Latex zu mindestens 40 Gew.-% aus sogenannten Hauptmonomeren (g) besteht, die ausgewählt sind aus der Gruppe bestehend aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

15. Verwendung nach Anspruch 14, **dadurch gekennzeichnet, dass** der Latex zu mindestens 60 Gew.-% aus Butadien oder Mischungen von Butadien und Styrol oder zu mindestens 60 Gew.-% aus C₁-C₂₀-Alkyl(meth)acrylaten oder Mischungen von C₁-C₂₀-Alkyl(meth)acrylaten mit Styrol aufgebaut ist.

16. Verwendung nach einem der vorstehenden Ansprüche, **dadurch gekennzeichnet, dass** die wässrige Anschlämmung zusätzlich eine gequollene Stärke enthält.

17. Verwendung nach einem der vorstehenden Ansprüche, **dadurch gekennzeichnet, dass** die Stärke eine native Stärke ist ausgewählt aus der Gruppe bestehend aus Kartoffel-, Mais-, Reis- oder Tapiokastärke oder eine chemisch modifizierte Stärke ist.

18. Verwendung nach einem der vorstehenden Ansprüche, **dadurch gekennzeichnet, dass** die Menge an gequollener Stärke 0,1 bis 10 Gew.-%, bezogen auf den Füllstoff beträgt.

## Claims

1. The use of aqueous slurries of finely divided fillers which are at least partly coated with a composition comprising at least one water-soluble amphoteric copolymer and at least one latex, as an additive to the paper stock in the production of filler-containing paper, filler-containing cardboard or filler-containing board by drainage of the paper stock.

2. The use according to claim 1, wherein the aqueous slurries are obtainable by treating aqueous slurries of finely divided fillers with at least one water-soluble amphoteric copolymer and at least one latex, the water-soluble amphoteric copolymer being obtainable by copolymerization of a monomer mixture of
(a) at least one N-vinylcarboxamide of the general formula 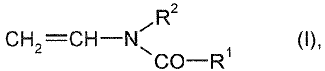 where R¹ and R², independently of one another, are H or C₁- to C₆-alkyl,
(b) at least one monomer which is selected from the group consisting of
(b₁) monoethylenically unsaturated sulfonic acids, phosphonic acids, phosphoric acid esters and derivatives thereof and
(b₂) monoethylenically unsaturated mono- and dicarboxylic acids, salts thereof and dicarboxylic anhydrides,
(c) optionally at least one monoethylenically unsaturated monomer differing from the components (a) and (b), and
(d) optionally at least one compound which has at least two ethylenically unsaturated double bonds in the molecule,
with the proviso that the monomer mixture comprises at least one monomer (b) having at least one free acid group and/or an acid group in salt form,
and subsequent partial or complete hydrolysis of the groups -CO-R¹ from the monomers (a) incorporated in the form of polymerized units in the copolymer.

3. The use according to either of the above claims, wherein the aqueous slurries are obtainable by treating aqueous slurries of finely divided fillers with at least one water-soluble amphoteric copolymer and at least one latex, the water-soluble amphoteric copolymer being obtainable by copolymerization of a monomer mixture of
(a) at least one N-vinylcarboxamide of the general formula 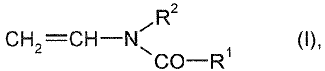 where R¹ and R², independently of one another, are H or C₁- to C₆-alkyl,
(b) at least one monomer from the group (b₂) which is selected from monoethylenically unsaturated carboxylic acids having 3 to 8 carbon atoms and the water-soluble salts, such as alkali metal, alkaline earth metal and ammonium salts, of these carboxylic acids,
(c) optionally at least one monoethylenically unsaturated monomer differing from the components (a) and (b), and
(d) optionally at least one compound which has at least two ethylenically unsaturated double bonds in the molecule,
and subsequent partial or complete hydrolysis of the groups -CO-R¹ from the monomers (a) incorporated in the form of polymerized units in the copolymer.

4. The use according to any of the above claims, wherein the aqueous slurries are obtainable by treating aqueous slurries of finely divided fillers with at least one water-soluble amphoteric copolymer and at least one latex, the water-soluble amphoteric copolymer being obtainable by copolymerization of a monomer mixture of
(a) N-vinylformamide,
(b) acrylic acid, methacrylic acid, and/or the alkali metal or ammonium salts thereof, and
(c) optionally other monoethylenically unsaturated monomers,
and subsequent partial or complete hydrolysis of the vinylformamide units present in the copolymers.

5. The use according to any of the above claims, wherein the hydrolysis of the vinylformamide units present in the copolymers is effected by the action of acids, bases or enzymes.

6. The use according to any of the above claims, wherein the degree of hydrolysis of the vinylcarboxamide groups incorporated in the form of polymerized units is from 0.1 to 100 mol%.

7. The use according to any of the above claims, wherein the hydrolyzed copolymers comprise
(i) from 1 to 98 mol%, preferably from 1 to 75 mol%, of vinylcarboxamide units,
(ii) from 1 to 98 mol%, preferably from 1 to 55 mol%, of units of monoethylenically unsaturated sulfonic acids, phosphonic acids, phosphoric acid esters or derivatives thereof, of units of monoethylenically unsaturated mono- and dicarboxylic acids, salts thereof and dicarboxylic anhydrides, preferably from 1 to 98 mol%, preferably from 1 to 55 mol%, of units of at least one monoethylenically unsaturated carboxylic acid having 3 to 8 carbon atoms,
(iii) from 1 to 98 mol%, preferably from 1 to 55 mol%, of vinylamine units of the formula (II) and/or amidine units of the formula (III) and/or (IV) 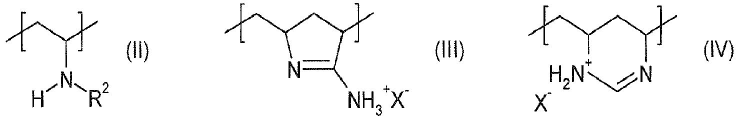 where, in the amidine units (III) and (IV), X⁻ in each case is an anion, and
(iv) up to 30 mol% of units of other monoethylenically unsaturated compounds.

8. The use according to any of the above claims, wherein the hydrolyzed copolymers comprise
(i) from 5 to 70 mol% ofvinylcarboxamide units,
(ii) from 3 to 30 mol% of units of monoethylenically unsaturated sulfonic acids, phosphonic acids and salts thereof, or from 5 to 45 mol% of units of acrylic acid, methacrylic acid, salts and mixtures thereof, preferably from 15 to 45 mol% of acrylic acid and/or methacrylic acid units, and
(iii) from 10 to 50 mol% of vinylamine units in salt form and/or amidine units of the formula (III) and/or (IV).

9. The use according to claim 1, wherein the aqueous slurries are obtainable by treating aqueous slurries of finely divided fillers with at least one water-soluble amphoteric copolymer and at least one latex, the water-soluble amphoteric copolymer being obtainable by copolymerization of a monomer mixture of
(b) at least one monomer which is selected from the group consisting of
(b₁) monoethylenically unsaturated sulfonic acids, phosphonic acids, phosphoric acid esters and derivatives thereof, and
(b₂) monoethylenically unsaturated mono- and dicarboxylic acids, salts thereof and dicarboxylic anhydrides,
(e) at least one ethylenically unsaturated monomer which carries a cationic group and/or a group to which a cationic charge can be imparted by protonation,
(f) optionally at least one monoethylenically unsaturated monomer differing from the components (b) and (e), and
(d) optionally at least one compound which has at least two ethylenically unsaturated double bonds in the molecule.

10. The use according to claim 1 or 9, wherein the aqueous slurries are obtainable by treating aqueous slurries of finely divided fillers with at least one water-soluble amphoteric copolymer and at least one latex, the water-soluble amphoteric copolymer being obtainable by copolymerization of a monomer mixture of
(b) at least one monomer from the group (b₂) which is selected from monoethylenically unsaturated carboxylic acids having 3 to 8 carbon atoms and the water-soluble salts, such as alkali metal, alkaline earth metal and ammonium salts, of these carboxylic acids,
(e) at least one ethylenically unsaturated monomer which is selected from the group consisting of the esters of α,β-ethylenically unsaturated mono- and dicarboxylic acids with C₂-C₁₂-amino alcohols which may be C₁-C₈-monoalkylated or C₁-C₈-dialkylated on the amine nitrogen, and the quaternization products of these esters with C₁-C₈-alkyl chlorides, C₁-C₈-dialkyl sulfates, C₁-C₁₆-epoxides or benzyl chloride,
(f) optionally at least one monoethylenically unsaturated monomer which differs from the components (b) and (e) and is selected from the group consisting of the N-vinylcarboxamides of the general formula (I) 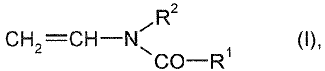 where R¹ and R² independently of one another, are H or C₁- to C₆-alkyl, (meth)acrylamides and (meth)acrylonitriles, and
(d) optionally at least one compound which has at least two ethylenically unsaturated double bonds in the molecule.

11. The use according to claim 1, 9 or 10, wherein the aqueous slurries are obtainable by treating aqueous slurries of finely divided fillers with at least one water-soluble amphoteric copolymer and at least one latex, the water-soluble amphoteric copolymer being obtainable by copolymerization of a monomer mixture of
(b) acrylic acid, methacrylic acid, and/or the alkali metal or ammonium salts thereof,
(e) dimethylaminoethyl (meth)acrylate methochloride,
(f) N-vinylformamide, acrylamide and/or acrylonitrile.

12. The use according to any of the above claims, wherein the aqueous slurry comprises from 1 to 70% by weight of at least one finely divided filler.

13. The use according to any of the above claims, wherein the amount of water-soluble amphoteric copolymer is from 0.01 to 5% by weight, based on the filler.

14. The use according to any of the above claims, wherein the latex comprises at least 40% by weight of so-called main monomers (g) which are selected from the group consisting of C₁-C₂₀-alkyl (meth)acrylates, vinyl esters of carboxylic acids comprising up to 20 carbon atoms, vinyl aromatics having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds or mixtures of these monomers.

15. The use according to claim 14, wherein the latex is composed of at least 60% by weight of butadiene or mixtures of butadiene and styrene or of at least 60% by weight of C₁-C₂₀-alkyl (meth)acrylates or mixtures of C₁-C₂₀-alkyl (meth)acrylates with styrene.

16. The use according to any of the above claims, wherein the aqueous slurry additionally comprises a swollen starch.

17. The use according to any of the above claims, wherein the starch is a natural starch selected from the group consisting of potato, corn, rice or tapioca starch or is a chemically modified starch.

18. The use according to any of the above claims, wherein the amount of swollen starch is from 0.1 to 10% by weight, based on the filler.

## Revendications

1. Utilisation de suspensions aqueuses de charges finement divisées qui sont au moins partiellement revêtues d'une composition constituée par au moins un copolymère amphotère soluble dans l'eau et au moins un latex comme additif de la pâte à papier lors de la fabrication de papier contenant des charges, de carton contenant des charges par déshydratation de la pâte à papier.

2. Utilisation de suspensions aqueuses selon la revendication 1 **caractérisée en ce que** les suspensions aqueuses peuvent être obtenues par traitement de suspensions aqueuses de charges finement divisées avec au moins un copolymère amphotère soluble dans l'eau et au moins un latex, le copolymère amphotère soluble dans l'eau pouvant être obtenu par copolymérisation d'un mélange de monomères, constitué par
(a) au moins un amide d'acide N-vinylcarboxylique de la formule générale 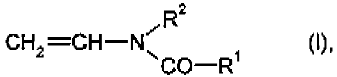 où R¹ et R² représentent, indépendamment l'un de l'autre, H ou un alkyle en C₁ à C₆,
(b) au moins un monomère, qui est choisi dans le groupe constitué par :
(b₁) les acides sulfoniques, les acides phosphoniques, les esters d'acide phosphorique éthyléniquement mono insaturés et leurs dérivés et
(b₂) les acides monocarboxyliques et dicarboxyliques éthyléniquement mono insaturés, leurs sels et anhydrides d'acide dicarboxylique,
(c) le cas échéant au moins un monomère éthyléniquement mono insaturé, différent des composants (a) et (b), et
(d) le cas échéant au moins un composé, qui présente au moins deux doubles liaisons éthyléniquement insaturées dans la molécule,
à condition que le mélange de monomères contienne au moins un monomère (b) comprenant au moins un groupe acide libre et/ou un groupe acide sous forme de sel,
et hydrolyse consécutive, partielle ou complète, des groupes -CO-R¹ des monomères (a) copolymérisés dans le copolymère.

3. Utilisation de suspensions aqueuses selon l'une quelconque des revendications précédentes, **caractérisée en ce que** les suspensions aqueuses peuvent être obtenues par traitement de suspensions aqueuses de charges finement divisées avec au moins un copolymère amphotère soluble dans l'eau et au moins un latex, le copolymère amphotère soluble dans l'eau pouvant être obtenu par copolymérisation d'un mélange de monomères, constitué par
(a) au moins un amide d'acide N-vinylcarboxylique de formule générale 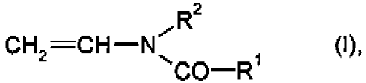 où R¹ et R² représentent, indépendamment l'un de l'autre, H ou alkyle en C₁ à C₆,
(b) au moins un monomère du groupe (b₂), qui est choisi parmi les acides carboxyliques éthyléniquement mono insaturés comprenant 3 à 8 atomes de carbone et les sels solubles dans l'eau, tels que les sels de métal alcalin, alcalino-terreux et d'ammonium de ces acides carboxyliques,
(c) le cas échéant au moins un monomère éthyléniquement monoinsaturé, différent des composants (a) et (b), et
(d) le cas échéant au moins un composé, qui présente au moins deux doubles liaisons éthyléniquement insaturées dans la molécule,
et hydrolyse consécutive, partielle ou complète, des groupes -CO-R¹ des monomères (a) copolymérisés dans le copolymère.

4. Utilisation de suspensions aqueuses selon l'une quelconque des revendications précédentes, **caractérisée en ce que** les suspensions aqueuses peuvent être obtenues par traitement de suspensions aqueuses de charges finement divisées avec au moins un copolymère amphotère soluble dans l'eau et au moins un latex, le copolymère amphotère soluble dans l'eau pouvant être obtenu par copolymérisation d'un mélange de monomères, constitué par
(a) le N-vinylformamide,
(b) l'acide acrylique, l'acide méthacrylique et/ou leurs sels de métal alcalin ou d'ammonium, et
(c) le cas échéant d'autres monomères éthyléniquement monoinsaturés,
et hydrolyse consécutive, partielle ou complète, des unités vinylformamide contenues dans le copolymère.

5. Utilisation de suspensions aqueuses selon l'une quelconque des revendications précédentes, **caractérisée en ce que** l'hydrolyse des unités vinylformamide contenues dans les copolymères est réalisée par l'action d'acides, de bases ou d'enzymes.

6. Utilisation de suspensions aqueuses selon l'une quelconque des revendications précédentes, **caractérisée en ce que** le degré d'hydrolyse des groupes amide de l'acide vinylcarboxylique copolymérisés est de 0,1 à 100 % en mole.

7. Utilisation de suspensions aqueuses selon l'une quelconque des revendications précédentes, **caractérisée en ce que** les copolymères hydrolysés contiennent
(i) de 1 à 98 % en mole, de préférence 1 à 75% en mole d'unités amide de l'acide vinylcarboxylique,
(ii) de 1 à 98 % en mole, de préférence 1 à 55% en mole d'unités d'acides sulfoniques, d'acides phosphoniques, d'esters de l'acide phosphorique éthyléniquement monoinsaturés, de leurs dérivés, ou d'unités d'acides monocarboxyliques et dicarboxyliques éthyléniquement monoinsaturés, leurs sels et anhydrides d'acide dicarboxylique, de préférence 1 à 98 % en mole, de préférence 1 à 55 % en mole d'unités d'au moins un acide carboxylique éthyléniquement mono insaturé comprenant 3 à 8 atomes de carbone,
(iii) de 1 à 98 % en mole, de préférence 1 à 55% en mole d'unités vinylamine de formule (II) et/ou d'unités amidine de formule (III) et/ou (IV) 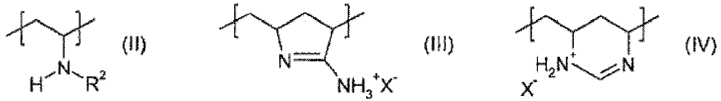 où, dans les unités amidine (III) et (IV), X⁻signifie à chaque fois un anion, et
(iv) jusqu'à 30 % en mole d'unités d'autres composés éthyléniquement mono insaturés.

8. Utilisation de suspensions aqueuses selon l'une quelconque des revendications précédentes, **caractérisée en ce que** les copolymères hydrolysés contiennent
(i) de 5 à 70 % en mole d'unités amide d'acide vinylcarboxylique,
(ii) de 3 à 30 % en mole d'unités d'acides sulfoniques, d'acides phosphoniques, éthyléniquement monoinsaturés et leurs sels ou de 5 à 45 % en mole d'unités de l'acide acrylique, méthacrylique, leurs sels et leurs mélanges, de préférence de 15 à 45 % en mole d'unités acide acrylique et/ou méthacrylique, et
(iii) de 10 à 50 % en mole d'unités vinylamine sous forme de sel et/ou d'unités amidine de formule (III) et/ou (IV).

9. Utilisation de suspensions aqueuses selon la revendication 1, **caractérisée en ce que** les suspensions aqueuses peuvent être obtenues par traitement de suspensions aqueuses de charges finement divisées avec au moins un copolymère amphotère soluble dans l'eau et au moins un latex, le copolymère amphotère soluble dans l'eau pouvant être obtenu par copolymérisation d'un mélange de monomères, constitué par
(b) au moins un monomère, qui est choisi dans le groupe constitué par :
(b₁) les acides sulfoniques, les acides phosphoniques, les esters d'acide phosphorique éthyléniquement monoinsaturés et leurs dérivés et
(b₂) les acides monocarboxyliques et dicarboxyliques éthyléniquement monoinsaturés, leurs sels et anhydrides d'acide dicarboxylique,
(e) au moins un monomère éthyléniquement insaturé, qui porte un groupe cationique et/ou un groupe pouvant être chargé cationiquement par une protonation,
(f) le cas échéant au moins un monomère éthyléniquement monoinsaturé, différent des composants (b) et (e), et
(d) le cas échéant au moins un composé, qui présente au moins deux doubles liaisons éthyléniquement insaturées dans la molécule.

10. Utilisation de suspensions aqueuses selon la revendication 1 ou 9, **caractérisée en ce que** les suspensions aqueuses peuvent être obtenues par traitement de suspensions aqueuses de charges finement divisées avec au moins un copolymère amphotère soluble dans l'eau et au moins un latex, le copolymère amphotère soluble dans l'eau pouvant être obtenu par copolymérisation d'un mélange de monomères, constitué par
(b) au moins un monomère du groupe (b₂), qui est choisi parmi les acides carboxyliques éthyléniquement mono insaturés comprenant 3 à 8 atomes de carbone et les sels solubles dans l'eau, tels que les sels de métal alcalin, alcalino-terreux et d'ammonium de ces acides carboxyliques
(e) au moins un monomère éthyléniquement insaturé, qui est choisi dans le groupe formé par les esters d'acides monocarboxyliques et dicarboxyliques éthyléniquement α, β-insaturés avec des aminoalcools en C₂ à C₁₂ qui peuvent être monoalkylés ou dialkylés en C₁ à C₈ sur l'azote de la fonction amine, ainsi que les produits de quaternisation de ces esters avec des chlorures d'alkyle en C₁ à C₈, des dialkylsulfates en C₁ à C₈, des époxydes en C₁ à C₁₆ ou le chlorure de benzyle,
(f) le cas échéant au moins un monomère éthyléniquement monoinsaturé, différent des composants (b) et (e), qui est choisi dans le groupe des amides d'acide N-vinylcarboxylique de la formule générale (I) 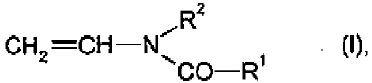 où R¹ et R² représentent, indépendamment l'un de l'autre, H ou un alkyle en C₁ à C₆, (méth)acrylamides et (méth)acrylonitriles, et
(d) le cas échéant au moins un composé, qui présente au moins deux doubles liaisons éthyléniquement insaturées dans la molécule.

11. Utilisation de suspensions aqueuses selon la revendication 1, 9 ou 10, **caractérisée en ce que** les suspensions aqueuses peuvent être obtenues par traitement de suspensions aqueuses de charges finement divisées avec au moins un copolymère amphotère soluble dans l'eau et au moins un latex, le copolymère amphotère soluble dans l'eau pouvant être obtenu par copolymérisation d'un mélange de monomères, constitué par
(b) l'acide acrylique, l'acide méthacrylique et/ou leurs sels de métal alcalin ou d'ammonium,
(e) le méthochlorurede (méth)acrylatede diméthylaminoéthyle,
(f) le N-vinylformamide, l'acrylamide et/ou l'acrylonitrile.

12. Utilisation de suspensions aqueuses selon l'une quelconque des revendications précédentes, **caractérisée en ce que** la suspension aqueuse contient 1 à 70 % en poids d'au moins une charge finement divisée.

13. Utilisation de suspensions aqueuses selon l'une quelconque des revendications précédentes, **caractérisée en ce que** la quantité de copolymère amphotère soluble dans l'eau représente 0,01 à 5 % en poids, par rapport à la charge.

14. Utilisation de suspensions aqueuses selon l'une quelconque des revendications précédentes, **caractérisée en ce que** le latex est constitué, à raison d'au moins 40 % en poids, de ce qu'on appelle des monomères principaux (g), qui sont choisis dans le groupe constitué par les (méth)acrylates d'alkyle en C₁ à C₂₀, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons ou des mélanges de ces monomères.

15. Utilisation de suspensions aqueuses selon la revendication 14, **caractérisée en ce que** le latex est constitué à raison d'au moins 60% en poids de butadiène ou de mélanges de butadiène et de styrène ou à raison d'au moins 60 % en poids de (méth)acrylates d'alkyle en C₁ à C₂₀ ou de mélanges de (méth)acrylates d'alkyle en C₁ à C₂₀ avec du styrène.

16. Utilisation de suspensions aqueuses selon l'une quelconque des revendications précédentes, **caractérisée en ce que** la suspension aqueuse contient en outre un amidon gonflé.

17. Utilisation de suspensions aqueuses selon l'une quelconque des revendications précédentes, **caractérisée en ce que** l'amidon est un amidon naturel, choisi dans le groupe constitué par l'amidon de pomme de terre, de maïs, de riz ou de tapioca ou un amidon chimiquement modifié.

18. Utilisation de suspensions aqueuses selon l'une quelconque des revendications précédentes, **caractérisée en ce que** la quantité d'amidon gonflé représente 0,1 à 10% en poids, par rapport à la charge.
